(19) Europäisches Patentamt / European Patent Office / Office européen des brevets

(11) EP 2 153 963 A1

(12) # EUROPEAN PATENT APPLICATION
published in accordance with Art. 153(4) EPC

(43) Date of publication:
**17.02.2010 Bulletin 2010/07**

(21) Application number: **08740765.6**

(22) Date of filing: **22.04.2008**

(51) Int Cl.:
***B29B 7/80*** *(2006.01)* ***B09B 3/00*** *(2006.01)*
***C08J 3/22*** *(2006.01)* ***C08L 3/00*** *(2006.01)*
***C08L 23/00*** *(2006.01)* ***C08L 91/06*** *(2006.01)*
***C08L 101/00*** *(2006.01)*

(86) International application number:
**PCT/JP2008/057775**

(87) International publication number:
**WO 2008/136314 (13.11.2008 Gazette 2008/46)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **01.05.2007 JP 2007121112**
**03.08.2007 JP 2007203021**
**10.10.2007 JP 2007263879**
**10.10.2007 JP 2007263880**

(71) Applicant: **Agri Future Joetsu Co., Ltd.**
**1, Tatsuoshinden**
**Oaza, Joetsu-shi, Niigata 9430132 (JP)**

(72) Inventors:
- **OHNO, Takashi**
**Joetsu-shi**
**Niigata 943-0132 (JP)**
- **SHIRAISHI, Nobuo**
**Kyoto-shi**
**Kyoto 606-0834 (JP)**

(74) Representative: **Matthews, Derek Peter**
**Dehns**
**St Bride's House**
**10 Salisbury Square**
**London**
**EC4Y 8JD (GB)**

(54) **POLYMER COMPOSITE MATERIAL, APPARATUS FOR PRODUCING THE SAME AND METHOD OF PRODUCING THE SAME**

(57) The invention intends to provide a technique for making a dispersion phase of a biomass origin component of a polymer composite material, wherein the dispersion phase is formed in a parent phase of a synthetic polymer, highly minutely and evenly. An apparatus (10) for manufacturing a polymer composite material is **characterized by** comprising: a cylinder (13) in which a feeding section (A) for feeding a principal component of the synthetic polymer and an excess hydrous substance of the biomass origin component is provided in the upstream side while a extracting means (17) is provided in the downstream side; a screw (15) which axially rotate within the cylinder (13), which has been set to a kneading temperature (Tz) at which the synthetic polymer melts, and extrudes the kneading substance comprising the main component and the excess hydrous substance toward the extracting' means (17); and a dehydration means (40) by which water contained in the kneading substance is removed under setting pressures (Pa, Pb, PC) being lower than the saturated vapor pressure (Pz) at the kneading temperature (Tz) employed in the cylinder (13) but higher than atmospheric pressure.

FIG.1A

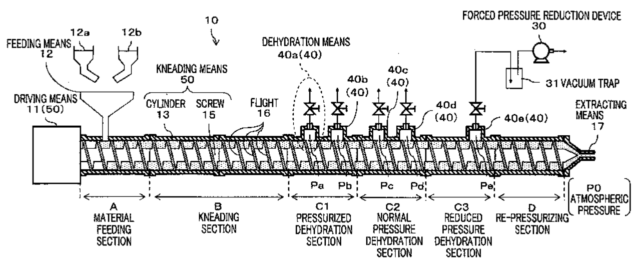


EP 2 153 963 A1

FIG.1B

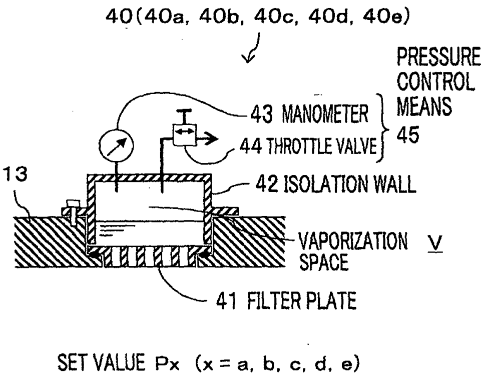
40(40a, 40b, 40c, 40d, 40e)
PRESSURE CONTROL MEANS 45
43 MANOMETER
44 THROTTLE VALVE
13
42 ISOLATION WALL
VAPORIZATION SPACE V
41 FILTER PLATE
SET VALUE Px (x = a, b, c, d, e)

FIG.1C

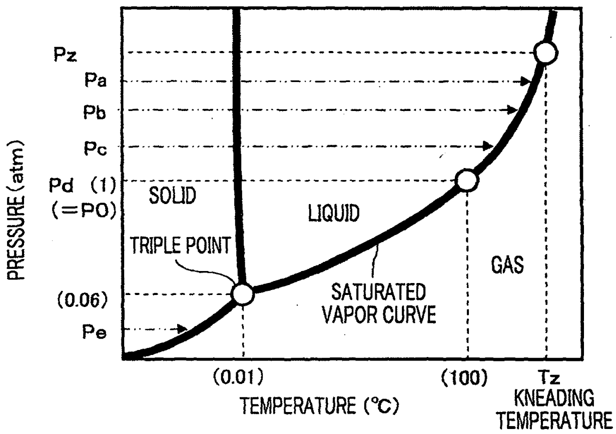
PRESSURE (atm)
Pz
Pa
Pb
Pc
Pd (1)
(=P0)
(0.06)
Pe
SOLID
LIQUID
GAS
TRIPLE POINT
SATURATED VAPOR CURVE
(0.01)
(100)
Tz
KNEADING TEMPERATURE
TEMPERATURE (°C)

**Description**

TECHNICAL FIELD

The present invention relates to a technical field related to a polymer composite material in which a synthetic polymer and a biomass origin component are mixed, and in particular, to a manufacturing apparatus which manufactures such a polymer composite material and a manufacturing method thereof.

BACKGROUND ART

The term "biomass (bioresource)" herein refers to reproducible organic natural resources among animals and plants which grow with solar energy.

Specifically, examples of the biomass include vegetation based biomass which has lignocellulose or cellulose as the principal component (thinned wood material and construction demolished material, etc. , which are waste materials from the lumber industry, pulp industry, etc., and rice straws, pod shells, and hulled rice shells, etc., which are agricultural waste materials), starchy based biomass which has amylose or amylopectin as the principal component (rice, wheat, corn, potato, sweet potato, tapioca, etc.), and chitin (or chitosan) based biomass (crab shells, lobster shells, etc.) which originates from crustaceans.

Currently, a research is being done to create polymer composite materials which reduce amount of use of the synthetic polymer produced from fossil resources to contribute to the preservation of earth environment and exhibit new features which have not existed before by compounding components originated from the.biomass and synthetic polymer composites. With respect to such a polymer composite material, it has been an important subject to disperse the biomass origin component into the parent phase of the synthetic polymer minutely and evenly.

However, biomass has high degree of crystalline property based on firm hydrogen bonds between molecules as well as a higher order structure, such as a three-dimensional cross-linked structure. Moreover, powder of biomass is easily condensable even if it is mechanically ground. For this reason, generally, it is not easy to disperse the biomass origin component into the parent phase of the synthetic polymer minutely and evenly.

As to conventional technology related to the above-described problems, it has been known to disperse starch based biomass into the parent phase minutely and evenly by heating and kneading with the principal agent of the synthetic polymer to gelatinize (alphanize) the starch substance (for example, Patent Document 1) .

In addition, as to the vegetation based biomass or chitin based biomass, it has been known to micrify the biomass in water solvent using high pressure homogenizer etc., to prepare a homogeneous suspension.

Then, the biomass origin component is dispersed in the parent phase minutely and evenly by heating and kneading the suspension with the principal agent of the synthetic polymer (for example, Patent Document 2).

Patent Document 1: JP2006-21502A
Patent Document 2: JP2006-289164A

DISCLOSURE OF THE INVENTION

OBJECT OF THE INVENTION

However, in the conventional technique described above, there is a problem in that the biomass origin component, which was dispersed minutely and evenly during the kneading treatment, partially re-condenses in a rapid dehydrating process due to exposure to atmospheric pressure. For this reason, the polymer composite material manufactured by the foregoing conventional technology has insufficient degree of achievement of minuteness and evenness of the dispersed phase against the parent phase.

The present invention intends to solve the above-mentioned problems, and an object of the present invention is to provide a technique for manufacturing a polymer composite material in which the dispersed phase of the biomass origin component in parent phase of the synthetic polymer is highly fine and uniform.

MEANS FOR SOLVING THE PROBLEM

In order to solve the above-described problems, the present invention provides an apparatus for manufacturing a polymer composite material in which a synthetic polymer and a biomass origin component are mixed. The apparatus includes a kneading means which kneads, at a predetermined kneading temperature, a kneading substance which contains at least an excess hydrous substance of the biomass origin component, a dehydration means which dehydrates the kneading substance at a setting pressure higher than the atmospheric pressure and lower than a saturated vapor

pressure at the kneading temperature and an extracting means which extracts the dehydrated kneading substance.

EFFECT OF THE INVENTION

According to the present invention, a technique for manufacturing a polymer composite material is provided, in which a dispersed phase of a biomass origin component in a parent phase of a synthetic polymer is highly fine and uniform.

BRIEF DESCRIPTION OF THE DRAWINGS

Fig. 1A is a longitudinal cross sectional view along a rotation axis showing a manufacturing apparatus of a polymer composite material according to a first embodiment of the present invention;
Fig. 1B is a partial cross sectional view showing a portion of a dehydration means in an enlarged manner;
Fig. 1C is a phase diagram of water for illustrating a function of the dehydration means;
Fig. 2A is a longitudinal cross sectional view along a rotation axis showing a manufacturing apparatus of a polymer composite material according to a second embodiment of the present invention;
Fig. 2B is a longitudinal cross sectional view along a rotation axis according to a third embodiment; and
Fig. 3A to Fig. 3C are longitudinal cross sectional views orthogonal to a rotation axis of a manufacturing apparatus of a polymer composite material according to a fourth embodiment.

DESCRIPTION FOR REFERENCE CHARACTERS

10, 10', 10", 60 manufacturing apparatus
12 hopper (feeding means)
13 cylinder
14 filling opening
15, 15', 15" screw
16 flight
17 extracting means
20 injection means
30 forced pressure reduction device
40 (40a, 40b, 40c, 40 d, 40e) dehydration means
41 filter plate
42 isolation wall
45 pressure control means
50, 62 kneading means
63 casing
65 rotor
67 extracting means
61, 68 opening and closing means
A material feeding section
B kneading section
C1 pressurized dehydration section (dehydration section)
C2 normal pressure dehydration section (dehydration section)
C3 reduced pressure dehydration section (dehydration section)
D re-pressurizing section
P0 atmospheric pressure
Pz saturated vapor pressure at kneading temperature
Px (Pa, Pb, Pc, Pd, Pe) setting pressure
Tz kneading temperature
V vaporization space
W kneading space (sealed space)

BEST MODE FOR IMPLEMENTING THE INVENTION

Embodiment of the present invention will be described in detail below.

(First Embodiment)

Fig. 1A is a longitudinal cross sectional view showing a manufacturing apparatus of a polymer composite material 10 (hereinafter, referred to as "manufacturing apparatus") according to the first embodiment of the present invention.

The manufacturing apparatus 10 includes a feeding means 12 (hopper), a kneading means 50, a dehydration means 40, and a forced pressure reduction device 30. The kneading means 50 includes a driving means 11, a cylinder 13 and a screw 15.

According to the manufacturing apparatus 10 configured as described above, if the raw material of the polymer composite material is supplied by the feeding means 12, the raw material is kneaded by the screw 15 which axially rotates in the cylinder 13, dehydrated by the dehydration means 40 and by the forced pressure reduction device 30, and extracted from the extracting means 17 as a melted substance of the polymer composite material.

It is noted that the melted substance of the polymer composite material passes through a die (not illustrated) which is provided in the extracting means 17 and has several tens of small holes, and is extracted in a bundle form. Furthermore, after the melted substance is passed through a cooling bath and solidified, the melted substance is drawn into a pelletizer (not illustrated) to be cut into rice-grain-like pellets.

The driving means 11 is a source of power which kneads the raw material of the polymer composite material and connected to one end of the screw 15 to axially rotate the screw 15. It is noted that although a single screw 15 is illustrated in Fig. 1, the manufacturing apparatus 10 is not limited to the arrangement having a single axis, and may include arrangements having a plurality of axes, in which two or more screws may be arranged in parallel.

Thus, if the manufacturing apparatus 10 is provided with a plurality of axes, the driving means 11 axially rotates each of the plurality of screws 15. In this case, it is noted that a direction of the axial rotation and a totation speed of each of the plurality of screws 15 are arbitrarily set.

The feeding means 12 supplies a principal agent of a synthetic polymer and an excess hydrous substance of the biomass origin component into the cylinder 13, which are raw materials of a polymer composite material. A feed amount and a compounding ratio of each of the agent and substatnce to be fed can be arbitrarily set by the feed units 12a, 12b which feed the synthetic polymer and the excess hydrous substance of the biomass origin component, respectively.

Furthermore, if the biomass origin component is originated from starch based biomass, the feeding means 12 may be provided with a water supplying means which supplies water necessary for gelatinizing the biomass origin component to be the excess hydrous substance, as will be described later.

Examples of substances to be fed into the manufacturing apparatus 10 include both a thermoplastic resin which melts by heating and a thermosetting resin which hardens by heating.

Examples of suitable principal agent of the thermoplastic polymer include a polyolefin based resin, such as low density polyethylene (LDPE), high density polyethylene (HDPE), polypropylene (PP), ethylene-vinyl acetate copolymer (EVA), and ethylene ethyl acrylate copolymer (EEA), which are formed in pellet form.

Moreover, without limiting to these, substances having a property which exhibits heat flow by heating and capable of extrusion molding in general, such as polycarbonate resin (PC), polyethylene terephthalate resin (PET) and acrylics butylene styrene (ABS), may be used without restrictions in particular. Furthermore, a plurality of these thermoplastic resins may be mixed in use.

On the other hand, if the substance which exhibits biodegradability, such as polylactic acid (PLA), poly butylene succinate (PBS) and poly caprolactone (PCL) is used as the principal agent of the thermoplastic polymer, the whole substance restores into the earth, and it is possible to obtain suitable polymer composite material from a viewpoint of environmental preservation. Similarly, it is suitable to use a polyolefin resin to which additive agents which provide biodegradability are added, such as DEGRANOVON (trademark) and ECM Master Batch (product name) by MacroTech Research, Inc. (United States), from a viewpoint of environmental conservation.

Examples of substances for use as the thermosetting polymer include various known thermosetting resins, such as epoxy resin, phenol resin, unsaturated polyester resin, urea resin, melamine resin, polyimide, diallyl phthalate and alkyd.

These thermosetting polymers can be molded into product by adding a known curing agent to a principal agent, maintaining a predetermined shape, setting to a cure temperature and performing a polymerization reaction. Since the monomer before the polymerization reaction is a low molecular weight compound, the principal agent of these thermosetting polymers can be liquid, solid, or half-solid, but if at least the temperature is raised, it exhibits fluidity.

Therefore, the principal agent of the thermosetting polymer and the biomass origin component are kneaded at

a kneading temperature which is set lower than a cure temperature.

Among these thermosetting polymers, an alkyd resin is a synthetic polymer which is formed by condensation polymerizing polyalcohol and polybasic acid, and the polybasic acid ester-bonds with hydroxy group (-OH) on the surface of the biomass origin component during the kneading. For this reason, affinity of the interface between the synthetic polymer and the biomass origin component becomes good, and therefore, it is possible to obtain a minutely and evenly dispersed structure.

Examples of such polyalcohol include propylene glycol, glycerin, trimethylolpropane and pentaerythritol.

Examples of the polybasic acid include phthalic anhydride, maleic anhydride and adipic acid.

Moreover, examples of the curing agent include organic superoxides (e.g., benzoyl peroxide, dicumyl peroxide).

Moreover, an epoxide may be used instead of polyalcohol. In this case, when the epoxide is kneaded, the three membered ring of the epoxide splits and opens so that circumferential water is added to become a bivalency polyalcohol, and thereby, an alkyd resin similar to the aforementioned case is synthesized. Thereafter, as to the epoxide unreacted at the time of the kneading, when it is set at the cure temperature to be formed into a molded product, the three membered ring thereof undergoes a ring opening polymerization and forms an epoxy resin.

With respect to the timing to feed the polybasic acid in the kneading process, it is desirable to give priority to carry out a chemical reaction (esterification) with the surface of the biomass origin component ahead of feeding the polyalcohol (or epoxide). This is because the surface of the biomass origin component is reformed with this and further improvement in the affinity with the synthetic polymer can be expected. Thus, after the excess hydrous substance of the biomass origin component and a part of the polybasic acid are chemically reacted to reform the surface on the preceding stage of the kneading process, the remainder of the polybasic acid and polyalcohol (or epoxide) are fed and kneaded.

It is noted that the curing agent may be fed at any time during the first half and second half of the kneading process and before and after the dehydrating process, however, the optimum timing is determined experimentally.

A substance employable as a wax is an organic compound which is solid at room temperature, melts at a temperature lower than a melting temperature of the principal agent of the synthetic polymer when heated and has a low viscosity. This wax (C) may be extracted from a natural product and may be synthesized industrially, and it is desirable that the carbon number of the main chain of the chain hydrocarbon in the organic compound is in a range of 10 to 100.

The wax melts preceding the principal agent of the synthetic polymer in the kneading process, and forms a mixed solution phase with water. For this reason, the viscosity of the kneading substance lowers, thereby, a load of the kneading means 50 is reduced and the kneadability is improved. Furthermore, the wax which melted preceding the principal agent of the synthetic polymer adheres to the biomass origin component, and promotes that the biomass origin component diffuses into the melted substance of the principal agent of the synthetic polymer.

If the carbon number is smaller than 10, the melted wax tends to evaporate at the kneading temperature, so that the wax is discharged outside together with water in the dehydrating process.

In addition, if the carbon number is larger than 100, the viscosity of the melted wax becomes large, and the wax tends not to form the mixed solution phase with water, and thereby, it does not contribute to improve kneadability.

Examples of waxes extracted from a natural product include saturated fatty acid. Saturated fatty acid is a compound shown with a rational formula of $CH3(CH2)nCOOH$, which is carboxylic acid of a chain hydrocarbon of monovalent. It is desirable that saturated fatty acid whose "n" is not less than 9 is applied to the present invention.

This saturated fatty acid has a carboxyl group (COOH) located at the end thereof as a hydrophilic group, and a chain hydrocarbon ($CH3(CH2)n$) as a hydrophobic group (lipophilic group). For this reason, the melted saturated fatty acid has the hydrophobic group in the center and the hydrophilic group orients outwards to form an interface with water, and therby it tends to form a mixed solution phase with water. In the mixed solution phase with water, the saturated fatty acid forms a spherical micelle, and therefore, it cannot be easily discharged outside together with water in the dehydrating process.

The spherical micelle of the saturated fatty acid in the mixed solution phase with water diffuses evenly into the whole kneading substance due to micrification by kneading. When the carboxyl group (COOH) of the saturated fatty acid located on the surface of the spherical micelle comes in contact with the biomass origin component, ester reaction is caused to form chemical bonding (chemical adsorption) with hydroxyl group (OH) on the surface of the biomass origin component.

Through such a chemical reaction, a surface of the biomass origin component is chemically modified by saturated fatty acid, and as a result, the hydrophilia disappears and the lipophilicity is improved. Accordingly, the biomass origin component obtains an advantageous property so that the biomass origin component easily diffuses into a continuous phase of the principal agent of the synthetic polymer.

On the other hand, examples of the wax which is industrially synthesized include olefin resin which is polymerized by single site catalyst represented by metallocene catalyst (especially, propylene based and ethylene based).

Specifically, examples of the wax which is industrially synthesized include independent polymer of monomer of propylene or ethylene, and copolymer of the monomers and $\alpha$-olefin. Meanwhile, examples of $\alpha$-olefin include ethylene,

1-butene, 1-pentene, 1-hexene, 4-methyl-1-pentene, 1-heptene, 1-octene The copolymer may be any of block copolymer, random copolymer, and random block copolymer.

It is noted that not less than two waxes of the organic compounds described above may be mixed for use.

The wax of olefin resin polymerized by a single site catalyst has uniform distribution of bifurcation of side chains, molecular weight, and crystal grain diameter, in comparison with the case of multisite catalyst represented by Ziegler-Natta catalyst.

Since the wax of an olefin resin polymerized by the single site catalyst has low melt viscosity in spite of large molecular weight, the wax maintains good kneadability and contributes to efficiently discharge water in the dehydrating process.

As for a compounding amount of the wax, it is desirable that the amount is in a range of 1 to 20 parts by weight against 100 parts by weight of a total sum of the synthetic polymer and the biomass origin component.

If the compounding amount of the wax is less than 1 part by weight, an improvement of the kneadability is not observed and efficient discharge of water in the dehydrating process is not observed too.

On the other hand, if the compounding amount of the wax is greater than 20 parts by weight, an average molecular weight of the manufactured polymer composite material lowers, and the mechanical properties of the molded product deteriorates.

Examples of a substance employable as an excess hydrous substance of the biomass origin component include raw rice from which water is drained off after immersing in water for a predetermined time and starch based grain, such as corn, potato and sweet potato, which are subjected to an easy treatment, for example, removing the core and the epidermis, arranging the size suitably, and mincing them.

If the starch based grain is placed at a common kneading temperature Tz (100 to 200°C) under existence of water more than a predetermined amount, the starch based grain is gelatinized due to entering of water molecules into it and causes a collapse of the crystal structure.

Since the starch gelatinized as such (biomass origin component) is released from a restraint of a hydrogen bond between the molecular chains, the starch obtains a property to be easily dispersed finely and evenly into the thermoplastic polymer being melted.

Moreover, if the feeding means 12 is provided with a water supplying means as described above, the excess hydrous substance may be adjusted by supplying water as appropriate necessary for gelatinizing the starch when the starch based grain is fed into the manufacturing apparatus 10.

Next, examples of the substance employable as the excess hydrous substance of the biomass origin component include a suspension in which a vegetation based biomass which has lignocellulose or cellulose as the principal component and a chitin based biomass, such as crab shells and lobster shells, etc., are micrified in water. Such a suspension may be formed by physically grinding the biomass in water using high pressure homogenizer such as described in the Patent Document 2, or performing chemical treatment. The excess hydrous substance herein refers to biomass to which water is added by humans as described above, as well as biomass which inherently contains water, and all substances are included in the excess hydrous substance as long as the substance contains water which is finally dehydrated in the kneading process.

For example, if adopting wood as the biomass, there may be a case where the wood is subjected to a pretreatment which mechanically grinds the wood to make it into a granular or a chip whose maximum diameter is several millimeters. Of course, the wood may be made into aggregate of particulates whose size is not more than the foregoing value. Such an aggregate of particulates includes a fiber object extracted from the biomass through a chemical process.

The fine particles of wood is an excess hydrous substance containing a dozen wt% to several tens wt% of water by a water absorption effect without adding water by humans. Such fine particles of wood (or hulled rice shells, etc.) can be directly fed into the manufacturing apparatus 10 without subjecting to a special process, such as a drying process.

One of the advantages of the biomass having a size of maximum diameter of about several millimeters is that a clogging is avoided upon feeding biomass raw material from the feeding means 12 into the manufacturing apparatus 10 even if the water content is large.

On the other hand, in the case that the biomass is an aggregate of the particulates and a size of the particulates is not larger than the forging value and the feeding means 12 is clogged because of the large water content due to water absorption, the clogging may be avoided by artificially impregnating water to the aggregate and further increasing the water content.

Thus, by further impregnating water into the excess hydrous substance of the biomass which originally contains water, the effect of improving the manufacturing efficiency can be obtained since a handling of the aggregate of the particulates, which are easily splashed, is simplified as well as the effect for avoiding the clogging is obtained.

Furthermore, the aggregate of particulates is kneaded with the synthetic polymer after the contained air is replaced by water. Therefore, the remaining air bubbles in the polymer composite material to be manufactured become less, thereby resulting in less defects.

It is noted that there may be a case where a compatibilizer which improves the compatibility between the synthetic polymer and the biomass origin component may be further supplied to the feeding means 12. As the compatibilizer, for example, saturated carboxylic acid, unsaturated carboxylic acid, or their derivatives maybe used. Moreover, as the compatibilizer, a substance synthesized by denaturing the synthetic polymer with unsaturated carboxylic acid or its derivatives may also be used.

It is also possible to add silica, fibrous substance, etc. regardless of whether it is inorganic or organic and to finely disperse these additive agent components in the polymer composite material.

The cylinder 13 is arranged such that a material feeding section A including the feeding means 12 is disposed at the uppermost stream and a portion including the extracting means 17 is disposed at the lowermost stream, and a section between the uppermost stream and the lowermost stream is divided into at least a kneading section B, a dehydration section C (C1, C2, C3), and a re-pressurizing section D. Moreover, a heater (not illustrated) is provided around the cylinder 13 for setting the kneading temperature Tz (refer to Fig. 1C) inside the cylinder 13.

The kneading section B is a section for kneading the principal agent of the synthetic polymer, the excess hydrous substance of the biomass origin component and the compatibilizer, which are supplied from the feeding means 12, with a predetermined pressure and at the kneading temperature Tz. Therefore, the biomass origin component is micrified in the kneading substance and an affinity with the synthetic polymer is given by suitably subjecting to a chemical reaction with a compatibilizer, thereby resulting in evenly dispersion in the kneading substance.

The dehydration section C can be further devided into a pressurized dehydration section C1, a normal pressure dehydration section C2 and a reduced pressure dehydration section C3, and at least one dehydration means 40 (refer to Fig. 1B) is disposed in each of these sections.

Here, the pressurized dehydration section C1 is a part which dehydrates water contained in the kneading substance by setting pressures Pa, Pb which are lower than a saturated vapor pressure Pz at the kneading temperature Tz and higher than atmospheric pressure P0, as shown in Fig. 1C.

By subjecting the kneading substance to a dehydration process which uses such setting pressures Pa and Pb, the kneading substance is further kneaded with the water content gradually reduced rather than rapidly reduced. Therefore, the biomass origin component which was micrified and dispersed in the kneading substance is further micrified and dispersed, while suppressing a re-condensation.

The normal pressure dehydration section C2 is a part which dehydrates water contained in the kneading substance which passed through the pressurized dehydration section C1 with the setting pressures Pc and Pd which are close to the atmospheric pressure P0, as shown in Fig. 1C. By subjecting the kneading substance to the dehydration process at the setting pressures Pc and Pd, a water content in the kneading substance whose water content is reduced is further gradually reduced, while further kneaded. Then, the biomass origin component which was micrified and dispersed in the kneading substance is further micrified and dispersed, while suppressing the re-condensation.

The reduced pressure dehydration section C3 is a part which dehydrates water contained in the kneading substance, which passed through the normal pressure dehydration section C2 with setting pressure Pe which is lower than the atmospheric pressure P0, by the forced pressure reduction device 30 as shown in Fig. 1C. By subjecting the kneading substance to the dehydration process with such setting pressure Pe, most of the water contained in the kneading substance is removed.

The vacuum trap 31 to which the reduced pressure dehydration section C3 is connected cools the evaporated vapor to condense into liquid and prevents the hot saturated vapor from entering into the forced pressure reduction device 30 to supress the degradation thereof.

Thus, since the pressure given to the kneading substance is reduced gradually from the saturated vapor pressure Pz at the kneading temperature Tz for dehydration in the dehydration section C, the re-aggregation of the biomass origin component can be suppressed and the micrification and the dispersion can be promoted.

The re-pressurizing section D is a part which continually kneads the kneading substance which is completed the dehydration process, and provides a pressure required to re-pressurize the kneading substance and extract it from the extracting means 17. Then, the melted substance of the polymer composite material in which the biomass origin component is dispersed minutely is extracted from the extracting means 17.

A spiral flight 16 is formed around an axis of a screw 15. The kneading substance is pushed out toward downstream of the cylinder 13 from upstream by the flight 16 which provides a pressure generated by the axial rotation of the screw 15.

The dehydration means 40 includes a filter plate 41, an isolation wall 42, and a pressure control means 45, as shown in the partial cross sectional view of Fig. 1B.

The dehydration means 40 configured as such provides an arbitrary setting pressure Px (x=a, b, c, d, and e) which is lower than the saturated vapor pressure Pz at the kneading temperature Tz and higher than the atmospheric pressure P0 by the pressure control means 45 to the kneading substance in the cylinder 13. Therefore, the dehydration means 40 can gradually dehydrate water contained in the kneading substance rather than rapidly.

The filter plate 41 is arranged so that it closes an aperture provided on a surface of a wall of the cylinder 13,

and separates the inside of the cylinder 13 and the outside and selectively passes water contained in the kneading substance. Examples of such filter plate 41 include a filter plate provided with many holes on the surface of the plate and the surface of the plate is fixed along the inner wall surface of the cylinder 13.

The isolation wall 42 forms a vaporization space V which evaporates water filtered by the filter plate 41 and isolates the vaporization space V from the atmosphere. Examples of such isolation wall 42 include an isolation wall in which an opening of a container having a bottom part is fixed to an opening provided in the cylinder 13 in a manner substantially corresponding to the former opening, and further, the filter plate 41 is fixed to the isolation wall.

The pressure control means 45 includes a manometer 43 for measuring a pressure of the vaporization space V and a throttle valve 44 which variably provides a flow resistance to the gas (vapor) which is discharged into atmosphere through the isolation wall 42 from the vaporization space V, and sets the pressure of the vaporization space V to a predetermined setting pressure Px (x=a, b, c, d, and e).

By suitably adjusting a throttle amount of the throttle valve 44, it is possible to set the pressure of the vaporization space V to an arbitrary value from the saturated vapor pressure Pz at the kneading temperature Tz to the atmospheric pressure P0. That is, if the throttle valve 44 is blocked completely, the pressure of the vaporization space V is set to the saturated vapor pressure Pz, and if the throttle valve 44 is opened completely, it is set to the atmospheric pressure P0. Furthermore, the throttle valve 44 may be connected to the forced pressure reduction device 30 so as to set the pressure of the vaporization space V to not more than the atmospheric pressure P0.

Meanwhile, as to the pressure control means 45, it has been already desribed above that it is preferable to set a setting pressure $P_x$ smaller in the plurality of dehydration means 40, which are installed in the cylinder 13, as a position of the dehydration means 40 approaches the extracting means 17 (Pa > Pb > Pc) for suppressing the re-aggregation of the biomass origin component.

Moreover, the setting pressure $P_x$ is suitably set so that the fed liquid reagent is not evaporated and discharged, and water is preferentially discharged.

By setting the setting pressure Pe lower in a dehydration means 40 which is located at the lowermost stream among the plurality of dehydration means 40, which are installed in the cylinder 13, than the atmospheric pressure P0 (i.e., P0 > Pe), the dehydration of the kneading substance which is pushed out from the extracting means 17 is more completely performed.

(Explanation for Operation of Manufacturing Apparatus)

Now, an operation of the manufacturing apparatus 10 and a function of the dehydration means 40 will be described with reference to Fig. 1A, Fig. 1B, and Fig. 1C, which is a phase diagram of water.

The principal agent of the synthetic polymer, the excess hydrous substance of the biomass origin component and other necessary components (wax, compatibilizer, etc.) are fed into the manufacturing apparatus 10 through the feeding means 12, and kneaded by the kneading means 50 at the set kneading temperature. Then, the activated water invades between the molecule chains of the biomass, and loosens intermolecular bondings. Furthermore, the mechanical energy provided upon the kneading causes the biomass to cleave to promote the micrification.

Furthermore, the melted wax forms a low viscosity mixed liquid phase with water, lowers the viscosity of the total kneading substance to improve the kneadability, and adheres to a surface of the biomass origin component. Moreover, as for the other compounds (e.g., compatibilizer, fatty acid, polybasic acid) having a carboxyl group, they replace the hydroxyl group (OH) on the surface of the biomass origin component (R') with a substituent group having an ester bonding by a dehydration reaction (ester reaction) shown in the following formula (3). Therefore, the hydrophilic nature of the biomass origin component is lowered and the connection of the biomass origin component with water is weakened, and as a result, an efficient dehydration can be performed in the next dehydrating process.

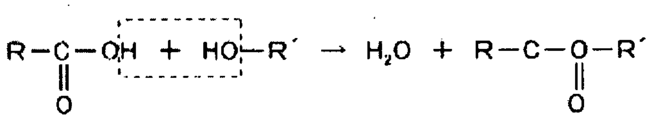

A kneading substance reached the dehydration means 40a located at the uppermost stream among the dehydration means installed in the cylinder 13 is pushed against the filter plate 41 with the pressure provided by the screw 15, and water contained in the kneading substance selectively passes through the filter plate 41 to be collected in the vaporization space V. The water collected in the vaporization space V has a kneading temperature Tz and evaporates in the vaporization space V where the pressure Pa is set which is lower than the saturated vapor pressure Pz. The evaporated water (vapor) is discharged into the atmosphere through the throttle valve 44 of the pressure control means 45.

At the dehydration means 40a, since a differential pressure between the setting pressure Pa and the atmospheric

pressure P0 is small, the kneading substance is not rapidly dehydrated, and pushed out to the dehydration means 40b located at the downstream, while being kneaded in the condition that the water content is decreased.

Similarly, in the next dehydration means 40b, the water collected in the vaporization space V, where the pressure is set at pressure Pb which is lower than the saturated vapor pressure Pz, is also evaporated and discharged to the atmosphere.

In the subsequent processes in the dehydration means 40 (40c, 40d, 40e) provided in the downstream side, similar operations are repeated and the kneading substance is kneaded, while gradually being dehydrated. Therefore, the re-aggregation of the biomass origin component is suppressed.

Accordingly, the kneading substance which is completed the dehydration is extracted from the extracting means 17 as a melted substance of the polymer composite material in which the biomass origin component is dispersed, and formed into rice-gain-like pellets (composition of polymer composite material), etc., by a pelletizer (not illustrated) and the like.

After the pellets are re-heated and melted, the pellets are molded into a bulk molded product by injecting them into a die, or molded into a film-shaped molded product by a stretching process (for example, inflation molding method, calendar molding method, T-Die molding method, and blow molding method), or molded into a foaming product by foaming, as a raw material for manufacturing a common polymer molded product.

It is noted that such a molded product may be directly manufactured.from the melted substance of the polymer composite material which is pushed out from the extracting means 17, without forming into pellets.

The embodiment described above is an example for explaning the present invention, and the present invention is not limited to the embodiment. The present invention may be embodied in various forms without departing spirits of the present invention. For example, in the manufacturing apparatus 10, the normal pressure dehydration section C2 and the reduced pressure dehydration section C3 may be unnecessary, as long as at least the pressurized dehydration section C1 is provided. This is because it can be proven from the phase diagram of water in Fig. 1C that at the kneading temperature Tz, the kneading substance may be sufficiently dehydrated (evaporate water) at a pressure higher than the atmospheric pressure P0.

Moreover, the illustrated sections (A, B, C1, C2, C3, D) of the cylinder 13 are examples for the purpose of illustration. It is possible to dispose another section as appropriate between these sections (for example, it is possible to dispose a kneading section B between the normal pressure dehydration section C2 and the reduced pressure dehydration section C3, or to dispose a plurality of material feeding sections A).

A specific application example of another example described abopve will be described below. A biomass (e.g., ground wood, unprocessed hulled rice shells, and etc.) and compatibilizer are fed from the feeding means 12, and kneaded in the first material feeding section A. In this material feeding section A, the biomass is further ground and micrified, and adsorbs the compatibilizer on the surface thereof to increase affinity with the synthetic polymer which is fed later.

Next, in the second raw material feeding section (not illustrated), the principal agent of the synthetic polymer and other necessary reagents are fed to be kneaded with the biomass. Therefore, the biomass origin component disperses into the continuous phase of the synthetic polymer minutely and evenly.

In the manufacturing apparatus 10, the dehydration sections C1, C2, and C3 may be located in an inetermediate process between the first material feeding section A and the second material feeding section (not illustrated), or may be located after the second material feeding section (not illustrated). Furthermore, the kneading section B may be added between any of the sections.

(Second Embodiment)

Now, the second embodiment of the manufacturing apparatus of the polymer composite material according to the present invention will be described with reference,to the longitudinal cross sectional view shown in Fig. 2A. As for a part in Fig. 2A which is the same or which corresponds to that of Fig. 1, the part is indicated with the same reference character and the detailed description is omitted by incorporating the above description.

The manufacturing apparatus 10' of the second embodiment is suitable for the case where a substance which has a large water content and high fluidity, such as a suspension, is employed as an excess hydrous substance of the biomass origin component as the raw material of the polymer composite material.

A characteristic configuration in such a manufacturing apparatus 10' is in adopting an injection means 20 which injects the excess hydrous substance of the biomass origin component into the the cylinder 13 and a screw 15' whose axia diameter is varied. A section where the raw material of the polymer composite material is fed is devided into a principal agent feeding section A1 where the principal agent of the synthetic polymer is fed and a suspension feeding section A2 which is provided in the downstream of the principal agent feeding section A1 and where a suspension of the excess hydrous substance of the biomass origin component is fed.

The injection means 20 is connected to the cylinder 13 through a filling opening 14 provided in the suspension

feeding section A2 of the cylinder 13, and includes a tank 21 which is filled with the excess hydrous substance of the biomass origin component, a motor 22 which gives a driving force for injecting the excess hydrous substance of the biomass origin component from the tank 21 into the cylinder 13, a check valve 24 which prevents a backward flow of the injected excess hydrous substance of the biomass origin component, and a throttle valve 25 which adjusts an injection amount of the excess hydrous substance of the biomass origin component to be injected into the cylinder 13.

The inside of the cylinder 13 in the vicinity of the filling opening 14 is in the condition that the kneading substance of the synthetic polymer is pressurized. Therefore, the injection means 20 is required to inject the excess hydrous substance of the biomass origin component at a pressure higher than the pressurized pressure. Moreover, the injection means 20 may be suitably provided with a heating means which heats the excess hydrous substance so that a temperature of the kneading substance is not lowered by the injected excess hydrous substance.

Supposing that the excess hydrous substance of the biomass origin component, which has such a high fluidity, is to be fed into the cylinder 13 by mixing with the synthetic polymer as in the manufacturing apparatus 10 of the first embodiment, there is a concern that they may be separated in the feeding means 12 to cause a variation in the compounding ratio of the biomass origin component, and unevenness in the compounding ratios in the kneaded substance may be caused. However, by injecting the excess hydrous substance of the biomass origin component, which has a high fluidity, from the filling opening 14 provided in the downstream, as in the manufacturing apparatus 10' of the second embodiment, it is possible to feed the biomass origin component into the kneading substance always at a constant ratio and evenly.

A substance which is injected from the injection means 20 is not limited to the above-described excess hydrous substance of the biomass origin component. For example, various liquid reagents to be blended in the kneading process, such as polybasic acid, polyalcohol and organic peroxide described above may be injected.

Moreover, the injection means 20 is not limited to a single arrangement as shown in Fig. 2, and a plurality of injection means may be arranged according to the object. In addition, a position where the injection means 20 is arranged is not limited to a position in the upstream of the dehydration means 40, and may be arranged in the downstream. This is because the liquid reagent described above may be preferable to.be injected into the kneading substance after the liquid reagent is sufficiently dehydrated.

Next, in a place installing the dehydration means 40 (40a, 40b, 40c, 40d) which are disposed in the pressurized dehydration section C1 or the normal pressure dehydration section C2, the axis diameter of the screw 15' is formed larger than that of the upstream. By configuring the screw 15' as such, the kneading substance is further pressurized in comparison with the upstream side. Therefore, a pressure to be given to the kneading substance is at least maintained at the same level even if the contained water is removed and the volume of the kneading substance is reduced.

Furthermore, in a place installing the dehydration means 40 (40e) which is disposed in the reduced pressure dehydration section C3, the axis diameter of the screw 15' is formed smaller than that of the upstream. By configuring the screw 15' as such, a pressure given to the kneading substance from the screw 15' in this section is released (reduced), and the kneading substance is exposed at a pressure lower than the atmospheric pressure P0, thereby further promoting the dehydration.

Furthermore, in the re-pressurizing section D after the dehydration sections C1, C2, C3, the axis diameter of the screw 15' is formed larger than that of the upstream. By configuring the screw 15' as such, the dehydrated kneading substance is re-pressurized in this section and extracted from the extracting means 17.

Meanwhile, in the foregoing description of the second embodiment, an example was shown, in which the principal agent of the synthetic polymer is fed into the cylinder 13 from the feeding means 12, and the suspension which contains the biomass origin component is fed into the cylinder 13 from the injection means 20.

As another application example according to the second embodiment, there is a case where the principal agent of the synthetic polymer and the starch based biomass (e. g. , uncooked rice) are fed into the cylinder 13, and water is supplied into the cylinder 13 using the injection means 20 as a water supplying means.

In this case, the injection means 20 may use a common hot water supply means having functions to control a flow rate and a temperature. Then, the starch based biomass (uncooked rice) absorbs the supplied water to become an excess hydrous substance and is gelatinized, while being kneaded with the principal agent of the synthetic polymer.

(Third Embodiment)

The third embodiment of the manufacturing apparatus of the polymer composite material according to the present invention will be described below with reference to the longitudinal cross sectional view shown in Fig. 2B. As for a part in Fig. 2B which is the same or which corresponds to that of Fig. 1 or Fig. 2A, a same reference character is assigned and a detailed description is omitted by incorporating the above description.

As with the case in the second embodiment, a manufacturing apparatus 10" of the third embodiment is suitable for the case where a substance which contains a large amount of water and has a high fluidity, such as a suspension, is employed as the excess hydrous substance of the biomass origin component to be used as the raw material of the

polymer composite material.

A characteristic configuration of the manufacturing apparatus 10" is such that a pitch of the flight 16 of a screw 15" is varied.

If the pitch of the flight 16 becomes smaller as the flight 16 approaches the downstream of the screw 15, a pressure to be given to the kneading substance increases, and in contrast, and in contrast if the pitch becomes larger, the pressure to be given to the kneading substance decreases.

In an installation location of the dehydration means 40 (40a, 40b, 40c, 40d) disposed in the pressurized dehydration section C1 or the normal pressure dehydration section C2, a pitch of the flight 16 of the screw 15" is formed narrower than that of the upstream side. In an installation location of the dehydration means 40 (40e) diposed in the reduced pressure dehydration section C3, a pitch of the flight 16 of the screw 15" is formed larger than that of the upstream side.

By configuring the screw 15" as such, the kneading substance is pressurized or depressurized in the portion where the dehydration means 40 is disposed in the same manner as the case of the second embodiment. Therefore, the dehydration is gradually promoted.

(Fourth Embodiment)

Next, a fourth embodiment of a manufacturing apparatus of a polymer composite material according to the present invention will be described with reference to a cross sectional view shown in Fig. 3. In the manufacturing apparatus 10 of Fig. 1 and Fig. 2, the feeding process of a raw material, the kneading process and the extracting process of the kneading substance proceed simultaneously without interruption, and the manufacturing apparatus 10 continuously manufactures a polymer composite material. On the other hand, in a manufacturing apparatus 60 according to the fourth embodiment, the feeding process of raw material, the kneading process and the extracting process of the kneading substance are repeated sequentially. That is, the manufacturing apparatus is a batch type which manufactures a polymer composite material intermittently.

The manufacturing apparatus 60 is equipped with a feeding means 12 (hopper), a kneading means 62 and a dehydration means 40. The kneading means 62 is equipped with a driving means (not illustrated), a casing 63 and a rotor 65.

Moreover, Fig. 3A to Fig. 3C are cross sections orthogonal to an rotation axis of the rotor 65, which differ along the longitudinal direction of the manufacturing apparatus 60 (includes the feeding means 12, the dehydration means 40 and the extracting means 67).

As for a part in Fig. 3 which is the same or corresponds to that of Fig. 1, the same reference character is assigned and the detailed description is omitted by incorporating the above description.

The kneading means 62 includes a casing 63 and a rotor 65, and agitates and kneads a fed principal agent of the synthetic polymer, an excess hydrous substance of the biomass origin component and other substances at a set kneading temperature to produce a minute and even polymer composite material.

The casing 63 includes a feeding means 12 which feeds the principal agent of the synthetic polymer and the excess hydrous substance of the biomass origin component, and an extracting means 67 which extracts the kneaded substance outside.

The feeding means 12 communicates with a kneading space W inside the casing 63 through a first opening and closing means 61, and if the first opening and closing means 61 is turned to an "open state", the principal agent of the synthetic polymer and the excess hydrous substance of the biomass origin component can be fed into the kneading space W from the feeding means 12. On the other hand, if the first opening and closing means 61 is turned to a "closed state", a flow of the gas which goes back and forth between the kneading space W and the feeding means 12 is blocked.

An extracting means 67 communicates with the kneading space W of the casing 63 through a second opening and closing means 68, and if the second opening and closing means 68 is tourned to an "open state", the kneading substance in the kneading space W can be extracted. On the other hand, if the second opening and closing means 68 is tourned to a "closed state", a flow of gas which goes back and forth between the kneading space W and the extracting means 67 is blocked.

Thus, if the first opening and closing means 61 and the second opening and closing means 68 are turned to the "closed state" , the kneading space W is sealed, and the kneading space W is held at a saturated vapor pressure Pz (> P0: atmospheric pressure) at the set kneading temperature Tz (refer to Fig. 1C).

A rotor 65 rotates in the kneading space W of the casing 63 which is sealed and set at the kneading temperature, and kneads the kneading substance. In Fig. 3, the rotor 65 is exemplary shown, where two rotators rotate in the opposite direction each other so as to wind up the fed substance from the feeding means 12 and push out the kneaded substance to the extracting means 67. However, the prsesnt invention is not limited to the arrangement described above and a well known arrangement may be applied.

As shown in Fig. 3B, the dehydration means 40 is provided in an opening of the kneading space W, which is

bored in the casing 63, adjusts a pressure in the sealed space and performs dehydration of the kneading substance at the adjusted pressure.

The filter plate 41 separates the kneading space W of the casing 63 and the outside, and selectively filtrates water contained in the kneading substance.

The isolation wall 42 forms a vaporization space V which communicates with the kneading space W through the filter plate 41, and is provided with a pressure control means 45.

The pressure control means 45 adjusts a pressure in the kneading space W, which is a sealed space, to set the pressure at a setting pressure, and includes a manometer 43 and a throttle valve 44.

Meanwhile, the dehydration means 40 in Fig. 3B is the same as in Fig. 1B. However, in the manufacturing apparatus 60 according to the present embodiment, an upper part of the kneading space W also plays the same roll as the vaporization space V which communicates with the kneading space W. For this reason, the pressure control means 45 may be directly disposed in the casing 63 without disposing the filter plate 41 and the isolation wall 42.

In addition, although not illustrated in Fig. 3, the injection means 20 (refer to Fig. 2) may be disposed in the manufacturing apparatus 60.

(Explanation for Operation of Manufacturing Apparatus)

The operation of the manufacturing apparatus 60 will be described with reference to Fig. 3A to Fig. 3C.

The first opening and closing means 61 is turned to an "open state" and the second opening and closing means 68 is turned to a "closed state". Then, the principal agent of the synthetic polymer, the excess hydrous substance of the biomass origin component and other necessary components (e.g., wax and compatibilizer) are fed into the manufacturing apparatus 60 through the feeding means 12. Thereafter, the first opening and closing means 61 is turned to the "closed state", and the fed substance is set to the kneading temperature and kneaded by the kneading means 62.

Then, on a timely basis, a water in the kneading space W is vaporized and discharged to the outside by operating the pressure control means 45, and necessary liquid reagents are also fed from the injection means 20 (refer to Fig. 2), which is not illustrated. Moreover, if necessary, a pressure in the kneading space W is reduced lower than the atmospheric pressure using the forced pressure reduction device 30 (refer to Fig. 1A) to dehydrate completely.

Next, the second opening and closing means 68 is turned to the "open state", and the kneaded substance in the kneading space W is extracted from the extracting means 67. By repeating the above processes, a polymer composite material is mass-produced.

As a principal agent of the synthetic polymer which is kneaded in the above-described manufacturing apparatuses 10, 10', 10" and 60 of a polymer composite material, both a thermoplastic polymer and a thermosetting polymer may be used. Moreover, as for a reagent which is added as appropriate to the principal agent of the synthetic polymer (including curing agent of thermosetting polymer), a known kind substance, a substance having a known characteristic and a known adding method may be used. Furthermore, as for the means for mixing such a reagent to the principal agent, the means is not limited to the exemplified embodiment, and optimal means may be adopted as appropriate depending on the practical cases.

Moreover, an order of feeding the principal agent of the synthetic polymer, the excess hydrous substance of the biomass origin component and other necessary components (wax, compatibilizer, etc.) from the feeding means 12, and also a timing and a number of the times of the dehydration may be set,as appropriate.

That is, all of the aforementioned components may be fed at once, kneaded, dehydrated and extracted. In addition, for example, first, the excess hydrous substance of the biomass origin component and the compatibilizer may be fed, kneaded and dehydrated, and subsequently, the principal agent of the synthetic polymer may be fed, kneaded, and accordingly, the kneaded substance is extracted.

<Biomass Dense substance of Polymer Composite Material>

If a biomass dense substance of a polymer composite material, in which a biomass origin component is blended with a high ratio, is prepared beforehand, a resin molded product may be manufactured by kneading the biomass dense substance with a synthetic polymer and diluting a concentration of the biomass origin component as appropriate.

Moreover, according to such a manufacturing method, a composite material in which the biomass origin component is evenly dispersed may be mass-produced without using water. Furthermore, a biomass composite material may be easily mass-produced with a common molding device without using a special manufacturing apparatus 10 which is provided with the dehydration means 40 described above.

In addition, if a biomass origin component is exposed alone, affinity with a synthetic polymer is lowered by the surface oxidization. However, if the biomass origin component is kept with the dense substance, the material degradation is hardly promoted by, for example, oxidation since the particles of the biomass origin component are covered by the synthetic polymer.

A biomass dense substance of a polymer composite material (henceafter, merely referred to as "dense substance") which is suitable for dilution use as descrived above will be explained below. It is noted that a synthetic polymer contained in a biomass dense substance is defined as a first synthetic polymer, and a synthetic polymer to be used later for diluting is defined as a second synthetic polymer.

As to a synthetic resin employable as a first synthetic polymer, although there is no limitation in particular, an ol,efin resin of a propylene based resin and an ethylene based resin is preferably used.

The polymerization method of the propylene based resin and the ethylene based resin is not limited, and as to the degree of polymerization, both oligomers (wax) having a number of monomer bindings from 10 to less than 100 and polymers exceeding 100 are included.

In order to manufacture a composite material which forms a dispersed phase in which the biomass origin component is evenly and minutely dispersed, it is desirable to employ a polymerization method using a single site catalyst which has a high degree of freedom in molecular designing, and to synthesize with a degree of polymerization having a melting temperature characteristic which will be described later.

An example of a characteristic that the first synthetic polymer composing the dense substance must possess is a good fluidity at the kneading temperature for manufacturing the dense substance.

As to a thermoplastic resin which is a crystalline polymer among the foregoing thermoplastic resins to be employable as the first synthetic polymer, a melting temperature to be measured with a differential scanning calorimetry (DSC) can be used as an index for evaluating a flow characteristic.

That is, by continuously changing a temperature of the crystalline polymer and detecting a transition heat when the crystal changes from solid to liquid due to melting by the DSC, it is possible to know a solid-liquid ratio of the first synthetic polymer at an arbitrary temperature.

In addition, at arbitrary temperature, it can be said in general that the higher the liquid ratio is, and if it is all liquid, the lower the temperature of the melting peek is, the better the fluidity due to low viscosity.

As for a non-crystalline polymer among thermoplastic resins, a melting phenomenon is not observed as in a crystalline polymer. Therefore, a glass transition temperature to be measured by the DSC can be used as an index for evaluating a flow characteristic.

In a first synthetic polymer that has a propylene based resin which is a crystalline polymer as a principal component, it is desirable that a melting temperature to be measured by the DSC is in a range of 50 to 150°C.

In a first synthetic polymer that has an ethylene based resin which is a crystalline polymer as a principal component, it is desirable that a melting temperature to be measured by the DSC is in a range of 50 to 120°C.

Here, the melting temperature refers to a temperature range from a melting starting temperature Tim to a melting ending temperature Tem defined in JIS K 7121.

If a melting starting temperature Tim of the first synthetic polymer is less than the minimum (50°C) of the above-specified temperature range, the first synthetic polymer dissolves partially at a common use temperature (ordinary temperature). Hence, a surface of the biomass composite material, which is an end product, may be sticky.

Moreover, if a melting ending temperature Tem of the first synthetic polymer is higher than the maximum of the above-specified temperature range, an unmelted part may remain at the kneading temperature of a common synthetic resin of the same based one. Therefore, a biomass composite material, which is an end product, may include internal defects.

In order to have a melting temperature in the temperature range specified above, it is desirable that the first synthetic polymer is an olefin resin (propylene based resin, ethylene based resin) which is polymerized using the above-described single site catalyst.

This is because the melting temperature of the crystalline polymer is closely related to a primary structure of the polymer, and thereby, a polymerization by the single site catalyst which can precisely control the primary structure is advantageous. The reason why such a precisely controlled primary structure is possible is considered that a polymerization reaction becomes even because a part in connection with the polymerization reaction has a single property.

If the synthesis is performed by a single site catalyst, an olefin resin which has little bifurcation of side chains and homogenized distributions of a molecular weight and a crystal grain diameter is polymerized, in comparison with a case where a multisite catalyst represented by the Ziegler-Natta catalyst is used. Then, an olefin resin (first synthetic polymer), which has a melting temperature in a temperature range defined by the melting temperature of the DSC measurement and a sharp form of the melting peak, can be obtained.

Now, a case that the first synthetic polymer contains wax, whose carbon number of the main chain of the chain hydrocarbon is in a range of 10 to 100, will be discussed. The wax may be a synthetic resin synthesized industrially, or may be a natural resin extracted from a natural product, and in either case, the wax is solid at ordinary temperature and shows a viscosity lower than that of the second synthetic polymer when heated and melted. For this reason, when the dense substance which contains the wax and the second synthetic polymer are mixed and kneaded, the wax component melts ahead of the others. Accordingly, the viscosity of the kneading substance lowers to reduce a load of the kneading device and improve the kneadability, and as a result, the biomass origin component disperses into the continuous phase

of the second synthetic polymer evenly and minutely.

Here, if the carbon number of the main chain of the wax is smaller than 10, a melting point of the wax becomes low and the wax is liquid at ordinary temperature, then, a surface of the manufactured biomass resin becomes sticky.

If the carbon number of the main chain of the wax is larger than 100, the melting point of the wax becomes high and the melt viscosity becomes large. Hence, a dispersibility of the biomass origin component into the continuous phase of the second synthetic polymer decreases.

Examples of the wax among natural resins include saturated fatty acid.

The saturated fatty acid is monovalent carboxylic acid of chain hydrocarbon, which is a compound shown with a rational formula of $CH_3(CH_2)_nCOOH$. It is preferable that n is not less than 9 for applying to the present invention.

The carboxyl group (COOH) which is located at an end of the saturated fatty acid is a hydrophilic group, and a part of the chain hydrocarbon ($CH_3(CH_2)_n$) is a hydrophobic group (lipophilic group) .

For this reason, the carboxyl group (COOH) at the end of the saturated fatty acid undergoes chemical bonding (chemisorption) with a hydroxyl group (OH) on a surface of the biomass origin component (R) through a dehydration reaction (ester reaction) shown in the following formula.

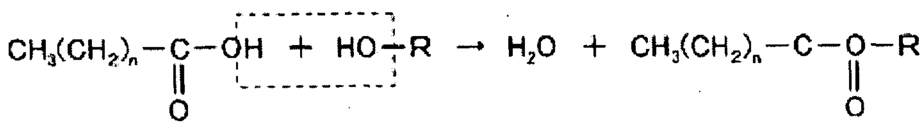

Through such a chemical reaction, the hydroxyl group (OH) on the surface of the biomass origin component is subjected to a chemical modification by the saturated fatty acid, and thereby, the hydrophilic property is cancelled to improve a lipophilic property.

Accordingly, the dispersed phase of the biomass origin component easily diffuses advantageously into the continuous phase of the second synthetic polymer.

As the wax of a synthetic resin, an olefin resin which is polymerized by the above-described single site catalyst is preferably used. Since the olefin resin has a long chain in comparison with a wax of a natural resin having the same melting point (or melt viscosity), and thereby, has a high degree of hardness, it is possible to obtain a composite material of the biomass resin which has an excellent mechanical property.

Moreover, a wax of olefin resin which is polymerized by a single site catalyst has a low melting point and low viscosity in comparison with other synthetic waxes (Ziegler-Natta catalyst method, high pressure method, etc.) which have a comparable degree of hardness.

Examples of the biomass origin component which composes the dense substance include starch based biomass which has amylose in which glucose bonds in straight chain by α-1, 4 glucosidic linkage, or amylopectin which has straight chains of both of α-1, 4 glucosidic linkage and α-1, 6 glucosidic linkage as the principal component; vegetation based biomass which has lignocellulose or cellulose as the principal component; and chitin (or chitosan) based biomass (crab shells, lobster shells, etc.) originating from crustaceans.

Regarding a pretreatment of the starch based biomass in manufacturing the dense substance, an easy treatment, such as removing a core and epidermis and cutting into appropriate size, or adding a necessary water for the gelatinization, is sufficient for the pretreatment. If the starch based biomass which is subjected to such an easy treatment and the first synthetic polymer together are neaded together, the starch is gelatinized and micrified by the contained water in the kneading process, and disperses into the first synthetic polymer evenly.

Meanwhile, the contained water herein is discharged from the dehydration means provided in the kneading device in the later process of the kneading process for manufacturing the dense substance.

Moreover, the starch based biomass as a raw material of the dense substance is not limited to grain which is subjected to such an easy treatment, and grain which was gelatinized by a known method in advance (starch having non-crystalline structure) and a component of amylose or amylopectin substance which is extracted the from these grains by a known method may be used as the raw material.

In addition, in the case that the biomass origin component of starch origin is adopted, amylase may be added in manufacturing of the dense substance in some cases in order to promote the micrification.

The amylase is an enzyme having a molecular weight of about 55, 000. There are α-amylase, β-amylase and glucoamylase, and all of them are mass-produced industrially.

The α-amylase irregularly cuts α-1,4 glucosidic linkage of the starch and hydrolyzes it into polysaccharide or oligosaccharide, the β-amylase cuts the starch from its end in a unit of two molecules of glucose and decomposes it into malt sugar, and the glucoamylase cuts α-1,4 glucosidic linkage of the nonreducing end of the sugar, and decomposes it into glucoses.

Furthermore, isoamylase and pullulanase selectively cut α-1,4 glucosidic linkage which is a branching portion of the sugars.

Among those, α-amylase is preferable in the viewpoint of promoting micrification of the biomass origin component which is originated from starch. In addition, isoamylase and pullulanase are suitable for preventing the biomass origin component from lowering of the molecular weight.

Meanwhile, enzyme activity of the α-amylase is maintained high in a hydrogen ion exponent range of pH5-pH7 and in a temperature range of 40°C to 80°C.

Therefore, in order to manufacture the dense substance, a timing to feed amylase into the starch based biomass may be at any time of before, at a time, or after the starch based biomass is fed into the kneading device. However, it is required to maintain the condition that the enzyme activity of the amylase is not lost.

In particular, in the case that the amylase is simultaneously fed, or after the starch based biomass is fed into the kneading device, it is necessary to set a kneading temperature in a range where the enzyme activity is not lost. In this case, it is preferable that a melting temperature is sufficiently low such that the fed first synthetic polymer flows sufficiently in the temperature range where the enzyme activity is not lost.

If the range leaves from an amylase activity condition, the enzyme of the amylase denatures and is deactivated, and especially at a high temperature, the activity of the amylase is lowered rapidly. As an example, there is a report showing that a residual activity after being left for 20 minutes at 70°C is 90%, in contrast, a residual activity after being left for 20 minutes at 75°C is lowered to 50%.

Meanwhile, with respect to an adding amount of the amylase, it is desirable that the adding amount is 0. 001 to 5 parts by weight agaist 100 parts of starch based biomass by weight. Here, if the adding amount of amylase is less than 0.001 parts by weight, the decomposition rate of the starch becomes slow, and if it is more than 5 parts by weight, the decomposition of the starch is promoted too much, and as a result, a molecular weight of the biomass origin component becomes small. This is not preferable.

If the starch based biomass is decomposed by the enzyme activity of amylase, the gelatinization reaction is promoted and the biomass origin component disperses minutely and evenly in the first synthetic polymer which is kneaded together.

The α-amylase after being subjected to enzymolysis of the starch is unnecessary. However, since there is no means to selectively remove it, it may be mixed into the dense substance as it is, or it may be subjected to a thermal denaturation by increasing the kneading temperature to lose the activity and mixed into the dense substance.

On the other hand, specifically, examples of substances which use the vegetation based biomass as a raw material include thinned wood material, construction demolished material, etc., which are waste materials from the lumber industry, pulp industry, etc., and rice straws, pod shells, waste paper, ground wood piece, wood powder, saw dust, plane shavings, bamboo dust, bagasse, fruit shell powder, cotton cloth, artificial silk (rayon), etc., which are agricultural waste materials. There is no limitation of their shape, and fiber-shaped and powder-shaped substances can be used.

In addition, a substance which is obtained by physically grinding the vegetation based biomass and chitin based biomass in water using high pressure homogenizer, or by micrifying in water by a chemical treatment, which is transformed in a suspension-like substance, can be used as appropriate.

Moreover, in order to suppress aggregation between these biomass origin components, alkali metal salt may be added in manufacturing the dense substance.

A kind of alkali metal salts is not limited to a specific one. However, examples of the alkali metal salts include alkali metal carbonate, such as lithium carbonate, sodium carbonate, potassium carbonate and cesium carbonate, and alkali earth metal salts, such as barium carbonate, calcium carbonate, and strontium carbonate.

When these alkali metal salts are added, a cohesive force between the biomass origin components becomes weaker in manufacturing the dense substance due to the affinity between the alkali metal ion and the biomass origin component, and thereby the dispersibility of the biomass origin component in the first synthetic polymer increases.

Moreover, the micrified biomass origin component is prevented from re-condensing during the storage after the dense substance was manufactured. Wnen the dense substance is mixed with the second synthetic polymer, a fluidity of the dense substance in the second synthetic polymer is improved to be easily dispersed.

Regarding the adding amount of alkali metal' salt, it is desirable to add 0.001 to 5 parts by weight against 100 parts of biomass origin component by weight. Here, if the adding amount of alkali metal salt is less than 0.001 parts by weight, a cohesion force of the biomass origin component is not weakened, and if it is more than 5 parts by weight, a viscosity of the biomass origin component is reduced too much, and the kneadability with the first synthetic polymer is lowered. This is not preferable.

It has been already described above that the biomass to be kneaded together with the first synthetic resin is promoted the dispersion into the continuous phase of the first synthetic resin due to the existence of sufficient water, even if the biomass is vegetation based biomass or chitin based biomass, other than starch based biomass. For this reason, water may be added to the biomass as the raw material in order to improve the dispersibility of the biomass

origin component, and fed into the kneading device.

Moreover, in manufacturing the dense substance, the biomass origin component may be esterificated by kneading together the compatibilizer, such as saturated carboxylic acid, unsaturated carboxylic acid, and their derivatives in some cases.

Examples of such saturated carboxylic acids include succinic anhydride, succinic acid, anhydrous phthalic acid, phthalic acid, anhydrous tetrahydrophthalic acid, anhydrous adipic acid, and etc.. Examples of the unsaturated carboxylic acids include maleic acid, anhydrous maleic, anhydrous nadic, itaconic acid, anhydrous itaconic acid, citraconic acid, anhydrous citraconic acid, sorbic acid and acrylic acid.

Examples of derivatives of the unsaturated carboxylic acids include metal salt, amide, imide, and ester of the above-described unsaturated carboxylic acid.

As a timing for introducing the compatibilizer, there are following timings and cases that when the biomass origin component and the first synthetic polymer are fed into the kneading device almost simultaneously, a case that a pretreatment is performed by esterificating the biomass origin component by a compatibilizer in advance before the biomass origin component is fed into the kneading device, and a case that a pretreatement is performed by denaturing the first synthetic polymer with unsaturated carboxylic acid or its derivatives in advance before the biomass origin component is fed into the kneading device.

When the compatibilizer acts on the biomass origin component, the low affinity in an interface between the biomass origin component which generally shows hydrophilic property and the synthetic resin which generally shows hydrophobic property is improved by replacing hydroxyl group on the surface of the biomass origin component with ester group (esterification). Accordingly, since the affinity with the first synthetic polymer is improved, the biomass origin component is not condensed in the dense substance. In addition, since the affinity with the second synthetic polymer which is to be blended later is also improved, the biomass origin component disperses evenly into the kneaded composite material rapidly and minutely. Furthermore, a flow characteristic of the kneading substance is improved, and various characteristics of the composite material is improved, accordingly.

As to a compounding ratio of the biomass origin component and the first synthetic polymer in the dense substance, it is desirable that the first synthetic polymer contains 5 to 100 parts by weight against 100 parts of biomass origin component by weight.

If the first synthetic polymer is less than 5 parts by weight, all surfaces of the micrified biomass origin component cannot be soaked with the first synthetic polymer. If so, when the second synthetic polymer is blended into the dense substance and kneaded, the compatibility between the biomass origin component and the second synthetic polymer may be reduced in some cases, and the biomass origin component is prevented from evenly dispersing into the composite material.

If the first synthetic polymer is more than 100 parts by weight, the blended amount of the second synthetic polymer relatively decreases. If so, a diffusion of the second synthetic polymer, which has higher viscosity than that of the first synthetic polymer and has a low space occupation rate, into the biomass origin component becomes poor, and thereby the biomass origin component is prevented from evenly dispersing.

(Manufacturing Method of Dense Substance)

Examples of a manufacturing apparatus which manufactures the dense substance by heating and kneading include a kneader, a banbury mixer and an uniaxial or biaxial extruder. The manufacturing apparatus is required to include a dehydration means for dehydrating water contained in the kneading substance other than components which are provided in general.

Since an inside of the manufacturing apparatus, in which the kneading substance is kneaded, is sealed and maintained'at a high temperature and high pressure, the dehydration means functions as a dehydration means if an air opening path which can be opened and closed freely and communicates with the inside of the sealed space is provided.

Furthermore, if a forced pressure reduction device which can reduce a pressure inside the manufacturing apparatus lower than the atmospheric pressure can be further disposed as a dehydration means, the dehydration of water contained in the kneading substance is more efficiently performed.

A biomass which was processed a predetermined pretreatment, a first synthetic polymer, a compatibilizer, alkali metal salt and water are directly fed into the raw material feeding opening of such a manufacturing apparatus of the dense substance. If a biomass to be used as a raw material is a starch origin substance, amylase is also fed as appropriate.

Then, a temperature is set so that a kneading zone is brought to a predetermined temperature, the kneading is performed for a predetermined time to have the biomass origin component dispersed minutely in the first synthetic polymer.

When the biomass and water are needed together, the activated water invades between the molecular chains of the biomass to loose the intermolecular bondings. Furthermore, the mechanical energy given by the kneading crushes

the biomass and advances the micrification. Furthermore, the melted first synthetic polymer (wax) forms a mixed solution phase together with water and adheres to the surface of the biomass, and thereby, the lipophilicity of the biomass is improved.

When the air opening path of the dehydration means is opened, a water contained in the kneading substance is discharged into the air due to the difference in pressures. Furthermore, a forced pressure reduction device may be operated to perform dehydration, perfectly.

Finally, the kneaded substance of the dense substance which is extracted from the extracting opening of the manufacturing apparatus of the dense substance is passed through a known granulation device to be granulated (pelletized).

In the pellets of the biomass dense substance of the polymer composite material manufactured as such, the micrified biomass origin component is blended at a high ratio against the first synthetic polymer. Moreover, the dense substance which contains the biomass origin component at a high ratio as such can be manufactured by reducing an amount of water which functions as a dispersion promoter into the first synthetic polymer. Accordingly, a water to be discharged by the dehydration means is reduced, while maintaining the productivity of the dense substance.

(Second Synthetic Polymer)

As to the second synthetic polymer which is blended into the dense substance, a thermoplastic resin or a thermosetting resin may be used and not limited in particular as long as the affinity with the first synthetic polymer is good.

However, in order to secure a good dispersibility and other characteristics of the biomass origin component in the composite material when the dense substance and the second synthetic polymer are neaded to produce a biomass composite material, it is desirable that the first synthetic polymer and the second synthetic polymer have a relation shown by the following formula (however, it is limited to the case where the both are crystalline polymers).

$$T1 \leqq T2 \cdots (2)$$

Here, T1 indicates a melting peak temperature Tpm of the first synthetic polymer measured by the DSC, and T2 indicates a melting peak temperature Tpm of the second synthetic polymer which is blended into the dense substance. The melting peak temperature Tpm indicates a temperature at the tip of the melting peak measured by the DSC (refer to JIS K 7121).

Meanwhile, a melting peak of the synthetic resin, which is a crystalline polymer, measured by the DSC is not in a symmetric shape in general with respect to the temperature Tpm of the tip of the peak. However, the' kneading temperature is to be set to a temperature which sufficiently melts the second synthetic polymer, and if the dense substance and the second synthetic polymer are kneaded at this setting temperature, the first synthetic polymer melts into a melted substance ahead of the second synthetic polymer before the second synthetic polymer turns into a melted substance from solid, and the first synthetic polymer spreads into the whole kneading substance evenly.

Furthermore, the first synthetic polymer whose melting peak temperature Tpm is lower than that of the second synthetic polymer (T1 < T2) in general has a fluidic property which exhibits a small viscosity at the kneading temperature. For this reason, in the early stage of the kneading, since a melted substance of the dense substance having a low viscosity is filled into gaps between the pellets of the solid second synthetic polymer before the second synthetic polymer is melted, an effect that reduces an'internal flow resistance of the kneading device can be obtained, thereby resulting in contribution to improve the moldability and the productivity of the composite material.

In addition, if T1 = T2, this means that the first synthetic polymer and the second synthetic polymer are substantially the same synthetic resins, and a condition having an excellent affinity between the substances to be kneaded can be achieved. Accordingly, the biomass origin component disperses evenly into the whole composite material, and the moldability and productivity of the composite material are improved.

(Manufacturing Method 1 of Composite Material; when Second Synthetic Polymer is Thermoplastic Resin)

The second synthetic polymer that is a thermoplastic resin is blended with the pellets of the dense substance manufactured by the above-described manufacturing method of the dense substance, and both of them are kneaded by the kneading device together. Examples of a kneading device to be used include a general-purpose kneader, a mixing roll, a banbury mixer, and a uniaxial or biaxial extruder.

In a process to knead the second synthetic polymer that is a thermoplastic resin and the dense substance, a wax may be added so that a weight share ratio of the wax against a gross weight of the finally manufactured composite material is in a range of 0.5 to 30 weight%. Then, a viscosity of the kneading substance is lowered and a load of the

kneading device is reduced, while improving the kneadability. Accordingly, the biomass origin component disperses evenly and minutely in the continuous phase of the second synthetic polymer.

If the weight share of the wax is less than 0.5 weight%, a surface of the micrified biomass origin component cannot be soaked with the wax. If so, it becomes difficult to evenly disperse a dispersing phase of the biomass which is hydrophilic into a continuous phase of the synthetic resin which is hydrophobic.

On the other hand, if an amount of composition of the wax is more than 30 weight%, an average molecular weight of the synthetic resin component composing the manufactured composite material decreases, and the mechanical properties are deteriorated.

From these kneading devices, the melted substance of the composite material may be introduced to a molding device of various kinds of thermoplastic resins, such as, injection molding, extrusion molding, blow molding and inflation molding, to manufacture various products to be molded using a thermoplastic resin conventionally, various products to be restored into the soil by a reclamation, for example, home electronics, materials for agriculture, forestry and fisheries, raw material for engineering works and construction, disposable products for field leisure, film for packaging, garbage bag, material for afforestation used in deserts, wastelands, etc., fishing line, fish net, packaging film, sanitation products, such as a disposable diaper, stationery, container, tray and miscellaneous goods.

(Manufacturing Method 2 of Composite Material; when the Second Synthetic Polymer is Thermosetting Resin)

The dense substance manufactured by the above-described manufacturing method of the dense substance is mixed with the second synthetic polymer that is a thermosetting resin, and they are fed into a commonly used molding device of the thermosetting resin to manufacture the biomass composite material.

Examples of a molding device to be used include a compression molding device, an injection molding device and a transfer molding device, and various products, such as vehicle parts, electric parts, electronic components and etc., which were conventionally manufactured using a thermosetting resin, can be manufactured.

When the composite material is manufactured using a compression molding device, a mixture of the dense substance and the thermosetting resin (second synthetic polymer) is put into a concave portion (cavity) of a die which is set to a cure temperature, and pressed and hardened. In this case, the biomass dense substance of the polymer composite material is fluidized by heating, and fills a space between the particles of the second synthetic polymer. Thereafter, the hardening reaction of the second synthetic polymer advances, and the biomass composite material in which the biomass origin component is dispersed evenly and minutely can be obtained.

When a composite material is manufactured using an injection molding device or a transfer molding device, a mixture of the dense substance and a thermosetting resin (second synthetic polymer) is set to a flow temperature which is lower than the cure temperature, and fluidized. Then, the fluidized mixture (dense substance + second synthetic polymer) is injected into a die which is set at a cure temperature, and hardened.

In order to achieve the micrification and evenness of the dispersed phase of the biomass origin component, it is desirable to sufficiently stir the mixture which is in a flowing state.

Alternatively, the pellets of the dense substance may be subjected to a grinding process using a mixer, etc., before mixing with the second synthetic polymer. In this case, since a surface of the ground biomass origin component is a fresh surface, the affinity with the thermosetting resin is high and an evenly dispersed phase is easily obtained.

In this case, a pellet of the dense substance is formed in a predetermined size (usually the size of a grain of rice to the size of a pea) so that a surface area which is exposed to the open air becomes small, on the assumption that the pellet is micrified by a grinding process in molding the composite material.

Namely, not only the fresh surface of the biomass origin component to be ground and micrified as described above becomes broader, but also a heat to be generated by the surface oxidation of the dense substance is suppressed. Accordingly, it is possible to give storage stability to the pellet enabling a long-term storage.

In the above-described manufacturing processe of the dense substance or manufacturing process of the composite material, silica powder which has a mean particle size of not more than 50 microns may be fed as a deodorizer, or a known biodegradability providing agent which promotes the decomposition in the case of the reclamation may be fed.

As dscrived above, it is possible to disperse the dispersed phase of the biomass origin component into the continuous phase of the synthetic resin minutely and evenly by a common kneading device using the dense substance, and to mass-produce the biomass composite material easily.

## Claims

1. An apparatus for manufacturing a polymer composite material in which a synthetic polymer and a biomass origin component are mixed, the apparatus comprising:

kneading means which kneads a kneading substance containing at least an excess hydrous substance of the biomass origin component at a set kneading temperature;
dehydration means which dehydrates the kneading substance at a setting pressure higher than the atmospheric pressure and lower than a saturated vapor pressure at the kneading temperature; and
extracting means which extracts the dehydrated kneading substance.

**2.** The apparatus for manufacturing a polymer composite material according to claim 1,
wherein the kneading means comprising:

a cylinder provided with a feeding means which feeds a principal agent of the synthetic polymer and an excess hydrous substance of the biomass origin component in an upstream side, and the extracting means in a downstream side; and
a screw which axially rotates inside the cylinder which is set at the kneading temperature, and pushes the kneading substance from the feeding means toward the extracting means, and wherein the dehydration means comprising:
a filter plate which separates inside and outside of the cylinder and selectively filtrates water contained in the kneading substance;
an isolation wall which forms a vaporization space which evaporates water filtrated by the filter plate and blocks air; and
a pressure control means which sets a pressure of the vaporization space at the setting pressure.

**3.** The apparatus for manufacturing a polymer composite material according to claim 2, wherein the excess hydrous substance, a liquid reagent, or water is injected from an injection means provided in the downstream side as compared to the feeding means.

**4.** The apparatus for manufacturing a polymer composite material according to claim 1, wherein the kneading means comprising:

a casing provided with a feeding means which feeds a principal agent of the synthetic polymer and an excess hydrous substance of the biomass origin component and the extracting means; and
a rotor which rotates inside the casing which is sealed and set to the kneading temperature, and kneads the kneading substance; and wherein the dehydration means comprising:
a pressure control means which sets a pressure in the sealed space at the setting pressure.

**5.** The apparatus for manufacturing a polymer composite material according to claim 4, further comprising:

a filter plate which separates inside and outside of the casing and selectively filtrates water contained in the kneading substance; and
an isolation wall in which a vaporization space which communicates with the sealed space through the filter plate is formed, and provided with the pressure control means.

**6.** A method for manufacturing a polymer composite material in which a synthetic polymer and a biomass origin component are mixed, the method comprising:

a kneading step which kneads a kneading substance containing at least an excess hydrous substance of the biomass origin component at a set kneading temperature;
a dehydrating step which dehydrates the kneading substance at a setting pressure higher than the atmospheric pressure and lower than a saturated vapor pressure at the kneading temperature; and
an extracting step which extracts the dehydrated kneading substance.

**7.** The method for manufacturing a polymer composite material according to claim 6,
wherein the biomass origin component is originated from starch based biomass, and the method further comprising:

a water supplying step which supplies water to transform the starch based biomass into an excess hydrous substance.

**8.** The method for manufacturing a polymer composite material according to claim 6, wherein the biomass origin component is produced by mechanically micrifying biomass, and the method further comprising:

a hydrating step which hydrates an aggregation of the biomass origin component by water to produce an excess hydrous substance.

**9.** The method for manufacturing a polymer composite material according to claim 6, wherein in the kneading step, the method further comprising:

kneading an excess hydrous substance of the biomass origin component and a compatibilizer; and
mixing and further neading a principal agent of the synthetic polymer after the dehydrating step.

**10.** A polymer composite material in which a biomass origin component is dispersed, which is obtained by the method according to claim 6.

**11.** A molded product which is obtained by molding the polymer composite material in which the biomass origin component according to claim 10 is dispersed.

**12.** A biomass dense substance of a polymer composite material which has a first synthetic polymer and a biomass origin component as major components, the biomass dense substance being a raw material of a composite material which is manufactured by blending a second synthetic polymer and diluting a concentration of the biomass origin component.

**13.** The biomass dense substance of a polymer composite material according to claim 12, wherein
the first synthetic polymer includes a wax which has a carbon number of a main chain of chain hydrocarbon in a range of 10 to 100.

**14.** The biomass dense substance of a polymer composite material according to claim 12, wherein
the first synthetic polymer has an olefin based resin synthesized by a single site catalyst as a principal component.

**15.** The biomass dense substance of a polymer composite material according to claim 12, wherein
the biomass origin component has amylose, amylopectin, or their resolvent, which is originated from starch, as a principal component, and
amylase which is obtained by an enzymolysis of starch, or its heat denaturated substance is mixed into the biomass origin component.

**16.** The biomass dense substance of a polymer composite material according to claim 12, wherein
alkali metal salt is blended in the biomass dense substance.

**17.** The biomass dense substance of a polymer composite material according to claim 12, wherein
the biomass origin component is esterificated with saturated carboxylic acid, unsaturated carboxylic acid, or their derivatives.

**18.** A method for manufacturing a polymer composite material comprising:

a mixing and kneading step which mixes the biomass dense substance of a polymer composite material according to claim 12 and the second synthetic polymer, and kneads them together.

FIG. 1A

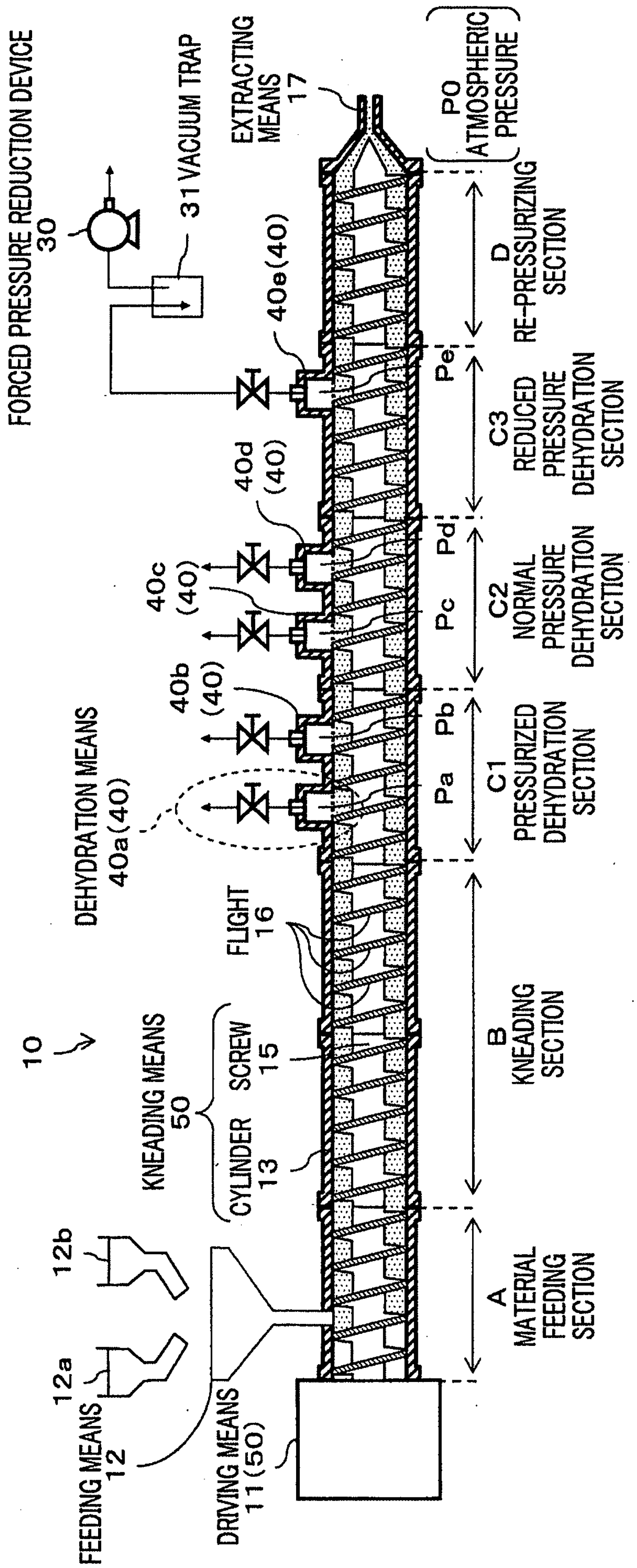
FORCED PRESSURE REDUCTION DEVICE
30
31 VACUUM TRAP
EXTRACTING MEANS
17
P0 ATMOSPHERIC PRESSURE
40e(40)
D RE-PRESSURIZING SECTION
Pe
C3 REDUCED PRESSURE DEHYDRATION SECTION
40d (40)
Pd
40c (40)
Pc
C2 NORMAL PRESSURE DEHYDRATION SECTION
40b (40)
Pb
Pa
C1 PRESSURIZED DEHYDRATION SECTION
DEHYDRATION MEANS
40a(40)
FLIGHT
16
B KNEADING SECTION
10
KNEADING MEANS
50
SCREW
15
CYLINDER
13
A MATERIAL FEEDING SECTION
12b
12a
FEEDING MEANS
12
DRIVING MEANS
11(50)

FIG.1B

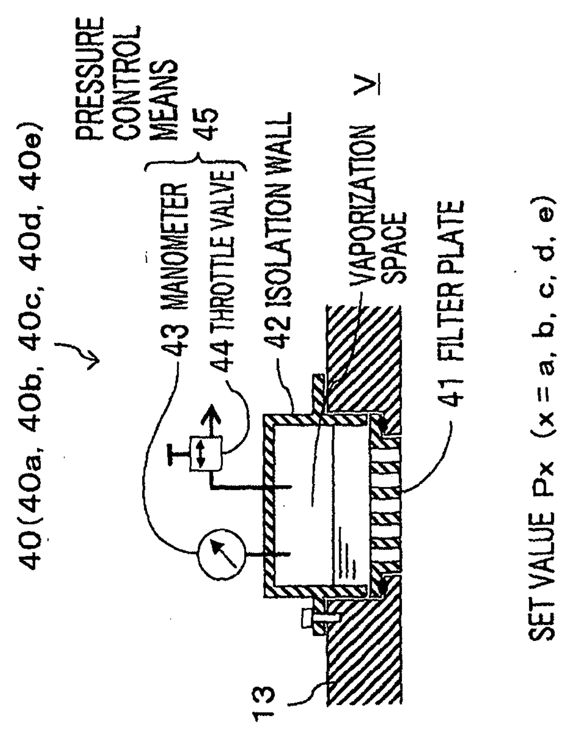
40(40a, 40b, 40c, 40d, 40e)
PRESSURE CONTROL MEANS 45
43 MANOMETER
44 THROTTLE VALVE
42 ISOLATION WALL
VAPORIZATION SPACE V
41 FILTER PLATE
13
SET VALUE Px (x = a, b, c, d, e)

FIG.1C

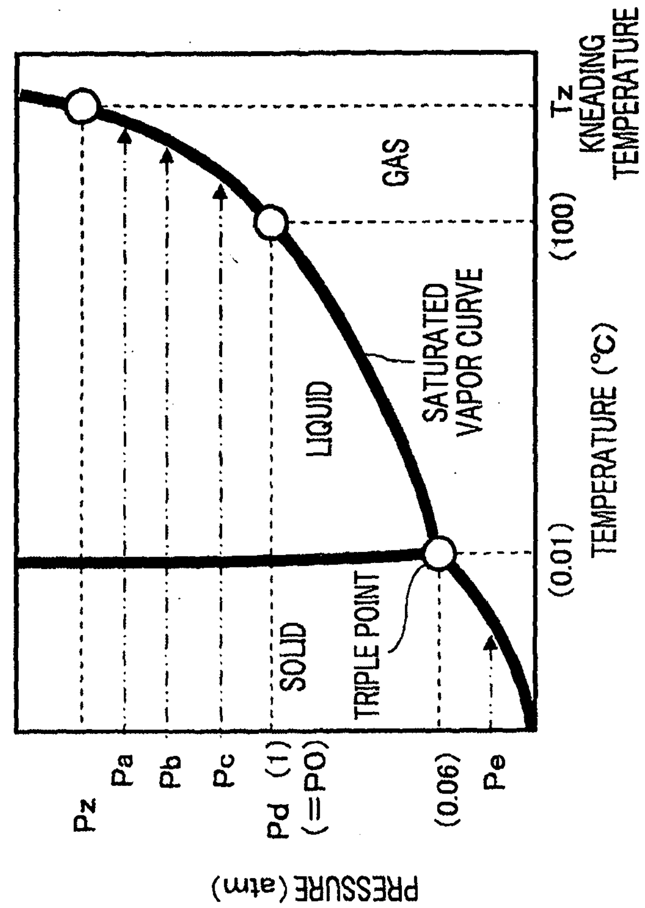
PRESSURE (atm)
Pz
Pa
Pb
Pc
Pd (1) (=PO)
(0.06)
Pe
SOLID
LIQUID
GAS
TRIPLE POINT
SATURATED VAPOR CURVE
(0.01)
(100)
Tz KNEADING TEMPERATURE
TEMPERATURE (°C)

FIG.2A

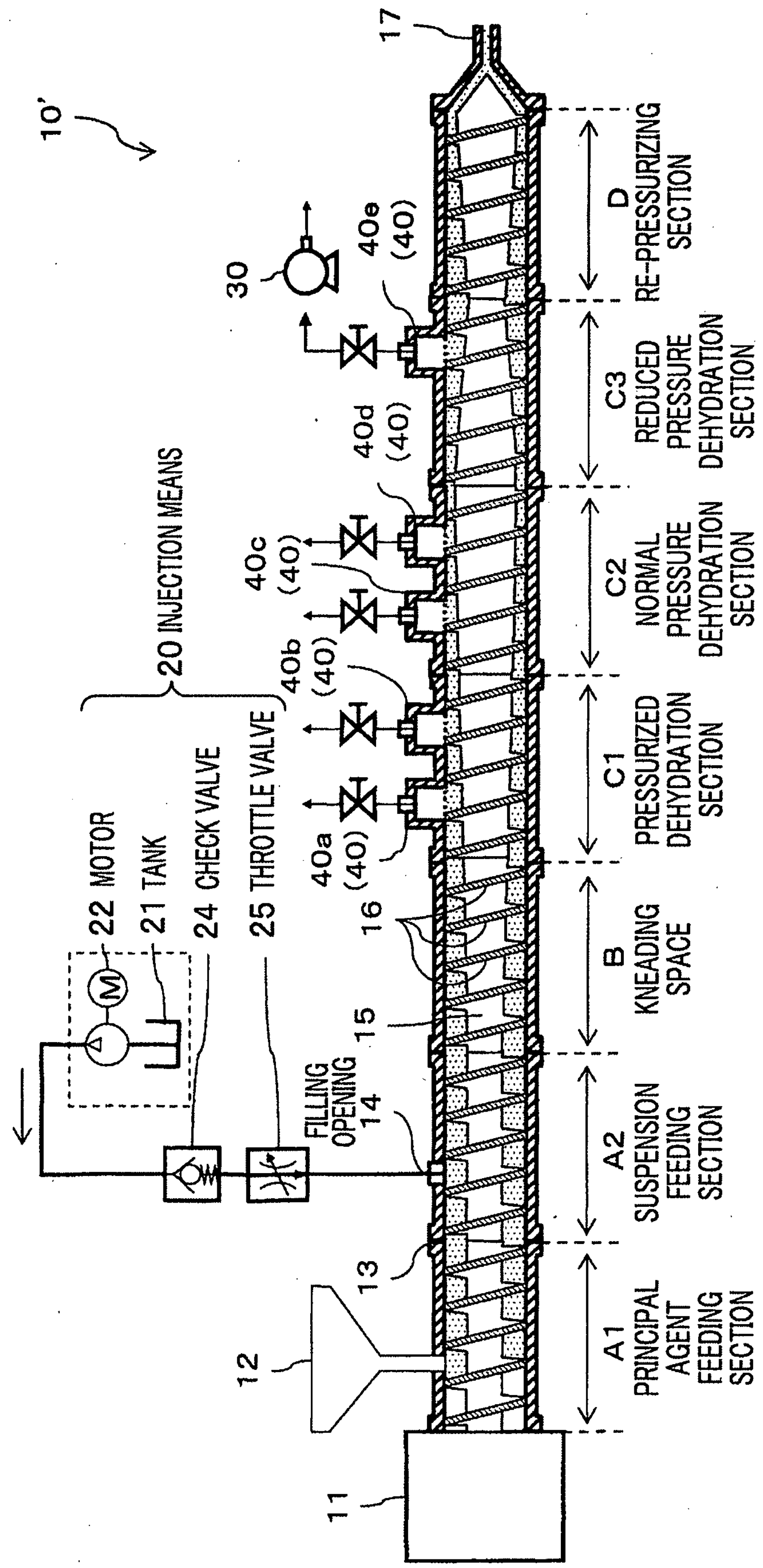
10'
17
30
40e (40)
40d (40)
40c (40)
40b (40)
40a (40)
20 INJECTION MEANS
22 MOTOR
21 TANK
24 CHECK VALVE
25 THROTTLE VALVE
M
FILLING OPENING 14
16
15
13
12
11
A1 PRINCIPAL AGENT FEEDING SECTION
A2 SUSPENSION FEEDING SECTION
B KNEADING SPACE
C1 PRESSURIZED DEHYDRATION SECTION
C2 NORMAL PRESSURE DEHYDRATION SECTION
C3 REDUCED PRESSURE DEHYDRATION SECTION
D RE-PRESSURIZING SECTION

FIG.2B

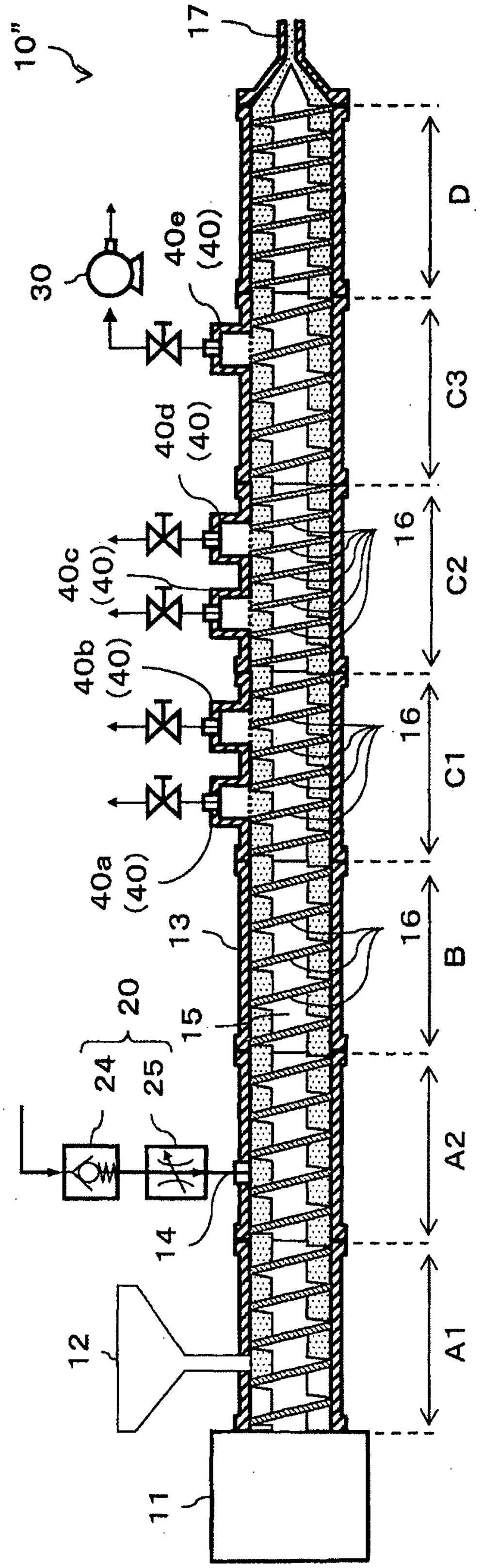
10"
17
30
40e
(40)
40d
(40)
40c
(40)
40b
(40)
40a
(40)
16
16
16
13
15
20
24
25
14
12
11
A1
A2
B
C1
C2
C3
D

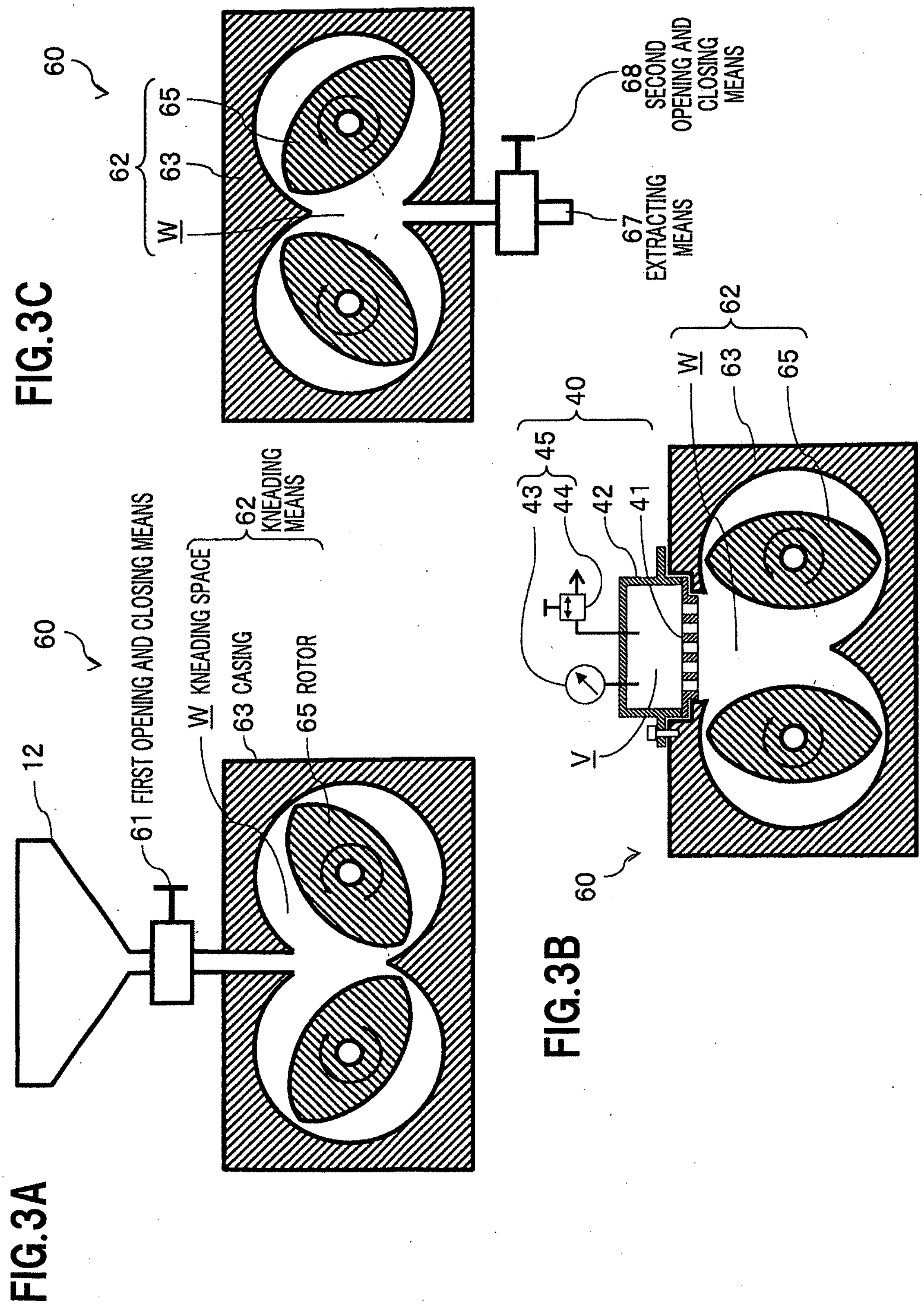


FIG.3A

FIG.3B

FIG.3C

## INTERNATIONAL SEARCH REPORT

International application No. PCT/JP2008/057775

A. CLASSIFICATION OF SUBJECT MATTER
*B29B7/80*(2006.01)i, *B09B3/00*(2006.01)i, *C08J3/22*(2006.01)i, *C08L3/00*(2006.01)i, *C08L23/00*(2006.01)i, *C08L91/06*(2006.01)i, *C08L101/00*(2006.01)i

According to International Patent Classification (IPC) or to both national classification and IPC

B. FIELDS SEARCHED

Minimum documentation searched (classification system followed by classification symbols)
B29B7/80, B09B3/00, C08J3/22, C08L3/00, C08L23/00, C08L91/06, C08L101/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2005/087857 A1 (Agri Future Joetsu Co., Ltd.),<br>22 September, 2005 (22.09.05),<br>Claims 1, 2, 13; Par. Nos. [0001] to [0003], [0010] to [0023], [0055] to [0057]<br>& EP 1724300 A1<br>Par. Nos. [0001] to [0003], [0015] to [0032], [0077] to [0080]; Claims 1, 2, 13<br>& JP 2005-255743 A & JP 2005-330402 A<br>& JP 2006-21502 A & CN 1930228 A | 12,17,18<br>1-11,13-16 |
| X | JP 2004-18603 A (Kabushiki Kaisha Kankyo Keiei Sogo Kenkyusho),<br>22 January, 2004 (22.01.04),<br>Claims; Par. Nos. [0020] to [0031], [0055] to [0074]; Figs. 4 to 6<br>(Family: none) | 12-14,16,18 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>15 July, 2008 (15.07.08) | Date of mailing of the international search report<br>29 July, 2008 (29.07.08) |
| Name and mailing address of the ISA/<br>Japanese Patent Office<br>Facsimile No. | Authorized officer<br><br>Telephone No. |

Form PCT/ISA/210 (second sheet) (April 2007)

INTERNATIONAL SEARCH REPORT

International application No.
PCT/JP2008/057775

C (Continuation). DOCUMENTS CONSIDERED TO BE RELEVANT

| Category* | Citation of document, with indication, where appropriate, of the relevant passages | Relevant to claim No. |
|---|---|---|
| X | JP 2005-199531 A (Kabushiki Kaisha Kankyo Keiei Sogo Kenkyusho), 28 July, 2005 (28.07.05), Claims; Par. Nos. [0023] to [0034], [0058] to [0077]; Figs. 4 to 6 & KR 10-2005-0074887 A | 12-14,16,18 |
| X | JP 04-173868 A (Nippon Petrochemicals Co., Ltd.), 22 June, 1992 (22.06.92), Claims; page 3, lower right column to page 4, upper left column; page 6, lower right column to page 7, upper left column (Family: none) | 12,18 |
| A | JP 06-184358 A (Roquette Freres), 05 July, 1994 (05.07.94), Full text & US 5703160 A & EP 579546 A2 & FR 2693734 A & CA 2100593 A1 | 1-18 |
| A | JP 07-113028 A (Du Pont-Mitsui Polychemicals Co., Ltd.), 02 May, 1995 (02.05.95), Full text (Family: none) | 1-18 |
| A | JP 2006-9007 A (Chen, Ming-Tung), 12 January, 2006 (12.01.06), Full text & US 2005/0288399 A1 & EP 1702950 A2 & TW 248957 B | 1-18 |
| A | JP 2006-21502 A (Agri Future Joetsu Co., Ltd.), 26 January, 2006 (26.01.06), Full text & EP 1724300 A1 & WO 2005/087857 A1 | 1-18 |
| A | JP 2006-289164 A (Agri Future Joetsu Co., Ltd.), 26 October, 2006 (26.10.06), Full text (Family: none) | 1-18 |
| A | JP 2006-328377 A (Mitsubishi Chemical Corp.), 07 December, 2006 (07.12.06), Full text (Family: none) | 1-18 |
| P,A | JP 2007-169612 A (Japan Polypropylene Corp.), 05 July, 2007 (05.07.07), Full text (Family: none) | 1-18 |

Form PCT/ISA/210 (continuation of second sheet) (April 2007)

**INTERNATIONAL SEARCH REPORT**

International application No.
PCT/JP2008/057775

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
(See extra sheet.)

1. ☒ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2007)

INTERNATIONAL SEARCH REPORT

International application No.
PCT/JP2008/057775

Continuation of Box No.III of continuation of first sheet(2)

The inventions according to claims 1 to 11 relate to an apparatus for producing a polymer composite material in which a synthetic polymer and a biomass-originating component are mixed together or a method of producing the same. The inventions according to claims 12 to 18 relate to a concentrated biomass of a polymer composite material in which a synthetic polymer and a biomass-originating component are mixed together and a method of producing a polymer composite material using this concentrated biomass.

Thus, the matter common to the inventions according to claims 1 to 18 resides in a polymer composite material in which a synthetic polymer and a biomass-originating component are mixed together. However, it has been clarified as the results of the search that this polymer composite material is not novel because of having been disclosed in documents WO 2005/087857 A1 (AGRI FUTURE JOETSU Co., Ltd.), September 22, 2005 (09.22.05), claims 1, 2 and 13, [0001] to [0003], [0010] to [0023], and [0055] to [0057]; EP 1724300 A1, [0001] to [0003], [0015] to [0032], and [0077] to [0080], claims 1, 2 and 13; JP 2005-255743 A; JP 2005-330402 A; JP 2006-21502 A; and CN 1930228 A.

As a result, such a polymer composite material in which a synthetic polymer and a biomass-originating component are mixed together falls within the category of prior art and, therefore, this common matter (a polymer composite material in which a synthetic polymer and a biomass-originating component are mixed together) cannot be considered as a special technical feature in the meaning within the second sentence of PCT Rule 13.2.

Next, the presence or absence of another common matter seemingly being a special technical feature in the meaning within the second sentence of PCT Rule 13.2 will be discussed.

<1> The inventions according to claims 1 to 11 are common to each other in "an apparatus for producing a polymer composite material in which a synthetic polymer and a biomass-originating component are mixed together, comprising a kneading unit whereby a matter to be kneaded which contains at least an excessive water-containing component originating in a biomass is kneaded at a setting kneading temperature and a dehydration unit whereby the kneaded matter is dehydrated under setting pressures being lower than the saturated vapor pressure at the kneading temperature but higher than the atmospheric pressure, or a production method using this production apparatus".

<2> The inventions according to claims 12, 17 and 18 are publicly known, since it is described in the documents as cited above that a molded article is obtained by separately adding a thermoplastic resin to a starch-containing resin composition that has been obtained by mixing a thermoplastic resin with a starch-based material. Therefore, these inventions have no special technical feature.

<3> The invention according to claim 13 is an invention that is characterized in "a first synthetic polymer containing a wax having from 10 to 100 carbon atoms in the main chain of a chain type hydrocarbon".

<4> The invention according to claim 14 is an invention that is characterized in "a first synthetic polymer containing an olefin-based resin having been synthesized using a single site catalyst as the main component".

(Continued to the next sheet.)

INTERNATIONAL SEARCH REPORT

International application No.
PCT/JP2008/057775

<5> The invention according to claim 15 is an invention that is characterized in "the biomass-origin component comprising starch-origin amylose, amylopectin or a digestion product thereof as the main component and being contaminated with amylase formed by the enzymatic digestion of starch or a thermal denaturation product thereof".

<6> The invention according to claim 16 is an invention that is characterized in "the concentrated biomass containing an alkali metal salt".

There is no special technical feature common to <1> and <3> to <6>.

Such being the case, the present international application has at least five invention groups.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006021502 A
- JP 2006289164 A